(19) Europäisches Patentamt
European Patent Office
Office européen des brevets

(11) **EP 2 506 444 B1**

(12) **FASCICULE DE BREVET EUROPEEN**

(45) Date de publication et mention de la délivrance du brevet:
**10.10.2018 Bulletin 2018/41**

(51) Int Cl.:
*H04B 1/7183* (2011.01)     *H03L 7/06* (2006.01)

(21) Numéro de dépôt: **12162620.4**

(22) Date de dépôt: **30.03.2012**

(54) **Procédé d'intégration de signaux à impulsions à Ultra Large Bande (ULB) ainsi que dispositif pour la mise en oeuvre du procédé**

Verfahren und Vorrichtung zur Integration von Ultrabreitbandsignalen

Method and apparatus for integrating Ultra Wide Band (UWB) signals

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2011 FR 1152844**

(43) Date de publication de la demande:
**03.10.2012 Bulletin 2012/40**

(73) Titulaire: **Commissariat à l'Énergie Atomique et aux Énergies Alternatives 75015 Paris (FR)**

(72) Inventeurs:
- **Villien, Christophe**
  **38000 Grenoble (FR)**
- **Daniele, Norbert**
  **38190 Bernin (FR)**

(74) Mandataire: **Croonenbroek, Thomas Jakob et al Innovincia 310 avenue Berthelot 69008 Lyon (FR)**

(56) Documents cités:
- **LI HUANG; EL GHOUTI N; ROUSSEAUX O; GYSELINCKX B: "Timing tracking algorithms for impulse radio (IR) based ultra wideband (UWB) systems", 2007 3RD INTERNATIONAL CONFERENCE ON WIRELESS COMMUNICATIONS, NETWORKING, AND MOBILE COMPUTING - WICOM '07 21-25 SEPT. 2007 SHANGHAI, CHINA, 21 septembre 2007 (2007-09-21), - 25 septembre 2007 (2007-09-25), pages 570-573, XP002662469, 2007 3rd International Conference on Wireless Communications, Networking, and Mobile Computing - WiCOM '07 IEEE Piscataway, NJ, USA**
- **DEPENG JIN ET AL: "Periodical-Pilot-Assisted Tracking Loop with RAKE Combining for High Rate DS-UWB Receivers", COMMUNICATIONS (ICC), 2010 IEEE INTERNATIONAL CONFERENCE ON, IEEE, PISCATAWAY, NJ, USA, 23 mai 2010 (2010-05-23), pages 1-6, XP031703597, ISBN: 978-1-4244-6402-9**
- **Rainer Moorfeld ET AL: "Ultra-Wideband (UWB-IR) Algorithm Implementation - Complexity and Performance", Proc. of IST Mobile and Wireless Communications Summit, 27 June 2004 (2004-06-27), XP055379188, Lyon, France Retrieved from the Internet: URL:https://www.researchgate.net/profile/Adolf_Finger/publication/228699817_Ultra-Wideband_Impulse_Radio_(UWB-IR)_Algorithm_Implementation_Complexity_and_Performance/links/0deec539ef506ad214000000.pdf [retrieved on 2017-06-07]**

- **Weihua Zhang ET AL: "Improved Delay-Locked Loop in a UWB Impulse Radio Time-Hopping Spread-Spectrum System", ETRI JOURNAL, vol. 29, no. 6, 10 December 2007 (2007-12-10), pages 716-724, XP055379520, KR ISSN: 1225-6463, DOI: 10.4218/etrij.07.0506.0032**

## Description

### Domaine technique et art antérieur

La présente invention concerne un procédé d'intégration de signaux émis depuis un émetteur vers au moins un récepteur Ultra Large Bande (ULB) ainsi qu'un dispositif pour la mise en oeuvre du procédé.

L'invention se situe dans le domaine de la technologie radio à impulsion à Ultra Large Bande (ULB) [" Ultra Wide Band " ou " UWB " en langue anglaise], c'est à dire utilisant des signaux dont le rapport entre la largeur de la bande à 10 dB et la fréquence centrale est supérieur à 25% et concerne plus particulièrement la correction de la dérive d'horloge entre un émetteur et un récepteur ULB lors d'une intégration.

Cette technologie radio fait l'objet d'une norme IEEE 802.15.4a.

Les applications de cette technologie sont du type à réseau personnel et à réseaux locaux sans fils bas débit, à savoir : étiquettes communicantes, réseaux de capteurs, réseaux ADHOC (c'est-à-dire capables de s'auto-organiser sans infrastructure préalablement établie), localisation d'objets, sécurité, etc.

Dans les systèmes de communication Ultra Large Bande impulsionnels, les données transmises entre un émetteur et un récepteur sont des impulsions électromagnétiques codées en amplitude, en phase, ou en position [cf. « M. Z. Win and R. A. Scholtz, "Impulse radio How it works", IEEE Comm. Letters, Vol. 2, no. 2, pp. 36- 38, February 1998"). Une étape critique du processus de communication entre l'émetteur et le récepteur se situe à la réception des paquets de données, pour déterminer les instants auxquels ces paquets de données arrivent au niveau du récepteur. Une synchronisation entre le signal reçu et le récepteur est alors nécessaire. Cette synchronisation est d'autant plus difficile à réaliser que le milieu dans lequel s'effectue la communication est perturbé (apparition de trajets multiples).

La norme IEEE 802.15.4a qui propose une couche physique de type Ultra Large Bande pour des réseaux personnels sans fils bas débit, impose de nouvelles contraintes en termes de complexité de circuit. De plus, elle propose l'utilisation de paquets de données ayant une durée relativement élevée, associée à des contraintes particulièrement fortes sur les imperfections d'horloges. Ces deux aspects réunis impliquent de réaliser des méthodes robustes de détection et de correction des imperfections d'horloge. Il existe actuellement de nombreuses solutions permettant d'effectuer la synchronisation d'un récepteur sur un paquet de données. Une technique fréquemment utilisée consiste à corréler le signal reçu avec une forme d'onde à différents instants (cf. les demandes de brevet WO 1996-041432, WO 2001-073712, WO 2001-093442, WO 2001-093444, WO 2001-093446, US 2005-0089083 et US 2006-0018369, ainsi que les articles "Timing Tracking Algorithms for Impulse Radio (IR) Based Ultra Wideband Systems", Li Huang et al., 2007; "Periodical-Pilot-Assisted Tracking Loop with RAKE Combining for High Rate DS-UWB Receivers", Depeng Jin et al., 2010; "Ultra-Wideband (UWB-IR) Algorithm Implementation - Complexity and Performance", Reiner Moorfield et al., 2004; "Improved Delay-Locked Loop in a UWB Impulse Radio Time-Hopping Spread-Spectrum System", Weihua Zhang et al., 2007).

Les architectures proposées permettent une synchronisation très rapide mais au prix, cependant, d'une complexité de circuit très élevée (les composants radiofréquence utilisés sont des mélangeurs, des intégrateurs, des oscillateurs locaux, etc .).

Toutefois, cette complexité et le surcoût n'est pas acceptable pour certaines applications, en particulier pour des applications de localisation, par exemple pour des pompiers en milieu enfumé ou pour la localisation de victimes d'avalanches (voir par exemple WO2006/003294), il se pose donc un problème de la dérive des horloges entre l'émetteur et le récepteur, qui va être illustré plus en détail dans ce qui suit.

En effet, pour localiser un premier émetteur/récepteur par rapport à un second émetteur/récepteur, on utilise généralement la mesure du temps de vol - ou une grandeur rattachée au temps de vol - d'une impulsion électromagnétique de très courte durée.

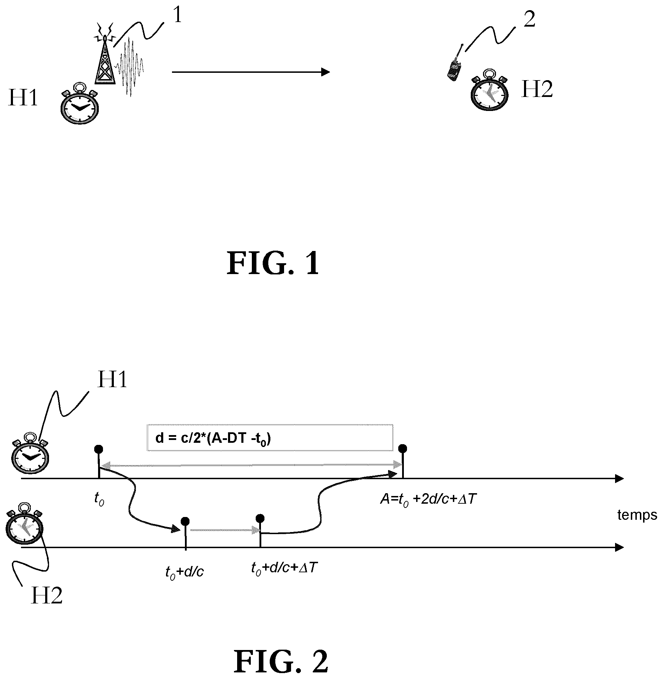

Ce principe, également appelé en anglais « *two ways ranging »* (TWR), est illustré sur les figures 1 et 2.

La figure 1 montre un premier 1 et un second 2 émetteur / récepteur 1, chacun disposant de sa propre horloge respectivement H1 et H2. Ces horloges ne sont pas synchronisées.

La figure 2 montre un chronogramme d'émission et de réception des signaux échangés entre le premier 1 et le second 2 émetteur / récepteur.

Dans cet échange de signaux, l'émetteur /récepteur 1 émet une impulsion électromagnétique à l'instant $t_0$. Compte tenu de la vitesse de propagation de la lumière c, cette impulsion arrivera à l'émetteur / récepteur 2 au temps $t = t_0 + d/c$, où d représente la distance entre l'émetteur 1 et le récepteur 2.

A ce stade, le dispositif 2 pourrait mesurer la distance d s'il connaissait le temps précis d'émission $t_0$, or ce n'est pas le cas car les deux dispositifs ne peuvent être synchronisés précisément à cause de leurs dérives d'horloge.

Donc, après une durée connue $\Delta T$, l'émetteur /récepteur 2 émet à son tour une impulsion qui arrive au niveau du dispositif 1 au temps $t = t_0 + 2d/c + \Delta T$

Contrairement à l'émetteur /récepteur 2, l'émetteur /récepteur 1 peut lui évaluer la distance car l'instant $t_0$ lui est connu, de même que la durée $\Delta T$ qui est une constante du système.

La précision avec laquelle les temps d'arrivée et par suite les distances peuvent être mesurés est directement liée à la durée de l'impulsion. Typiquement, les durées de ces impulsions sont à l'échelle de la nanoseconde (pendant 1 nanoseconde, l'impulsion parcourt 30 cm). On sait par ailleurs qu'une impulsion très étroite dans le domaine temporel est très étalée dans le domaine fréquentiel, pour cette raison les systèmes radio utilisant des impulsions courtes sont qualifiés de radio ultra large bande (ULB), en référence à leur étalement spectral.

En raison de leur fort étalement spectral (plusieurs centaines de mégahertz), ces systèmes sont également caractérisés par un très faible niveau d'émission. En effet, il n'existe aucune bande de fréquence allouée exclusivement pour les systèmes ULB, ces derniers doivent donc utiliser des bandes réservées pour d'autres systèmes radio « classiques » sans toutefois les perturber.

Le législateur a donc fixé des normes sur les puissances d'émission très basses (-41.3 dBm / MHz entre 3 et 5 GHz par exemple) pour prévenir toute interférence du système ULB vers le système radio « classique ». A contrario, les systèmes ULB subissent les émissions des systèmes radios classiques de plein fouet.

La faible puissance d'émission d'une part et la présence de nombreuses interférences d'autre part impliquent que les systèmes ULB sont limités à des applications à faible portée (typiquement quelques mètres). Par exemple, des mesures ont montrées que la portée d'une impulsion dans la bande 500 MHz-1GHz de 3V d'amplitude était de 3m environ (pour des antennes isotropiques).

Cependant, certains scénarios applicatifs, notamment la localisation, requièrent des portées bien supérieures de l'ordre de plusieurs dizaines de mètres par exemple.

Pour répondre au souci de ne pas augmenter la puissance de rayonnement, l'augmentation de la portée ne peut être réalisée que par des traitements numériques qui s'apparentent tous à un mécanisme de moyenne.

En effet, pour qu'un signal puisse être détecté, il faut que son amplitude soit supérieure à celle du bruit. En pratique, l'amplitude du signal doit être au moins 3 fois supérieure à l'écart type du bruit, c'est-à-dire que le rapport signal à bruit doit être d'au moins 10 dB environ.

La technique la plus efficace permettant de réduire le bruit consiste - dans son principe - à émettre plusieurs fois la même impulsion au niveau de l'émetteur et à calculer la moyenne (ou la somme) des signaux reçus au niveau du récepteur.

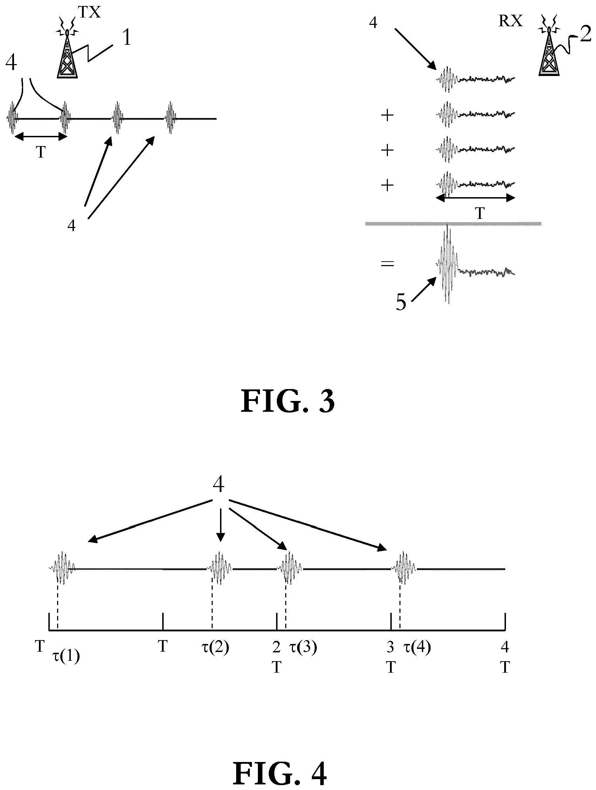

La période T avec laquelle une impulsion 4 est répétée, est appelée PRP (*Pulse Repetition Period*). Le récepteur va ensuite « découper » le signal reçu selon cette même période avant d'effectuer la sommation comme indiqué sur la figure 3. Ce mécanisme est aussi appelé « intégration » On voit sur la figure 3 schématiquement le signal intégré 5.

Le principe sous-jacent au mécanisme d'intégration est que le « signal » s'additionne mieux que le « bruit ». Pour comprendre ce principe, il faut tout d'abord se représenter un échantillon numérisé par le récepteur $r(t)$ comme la somme d'un « signal utile » (l'impulsion) $s(t)$ et d'un bruit $b(t)$

$$r(t) = s(t) + b(t) \qquad (1)$$

Le bruit étant une variable aléatoire, son amplitude est caractérisée par son écart type $\sigma$ qui est encore défini comme la racine carrée de sa variance.

Le rapport signal à bruit de l'échantillon r(t) est alors donné par

$$SNR(t) = 20\log\left(\frac{s(t)}{\sigma}\right) \qquad (2)$$

Le signal intégré $r_m(t)$ est décrit par

$$r_m(t) = \sum_{i=0}^{n-1} r(t + iT) \qquad (3)$$

De façon triviale, lorsque l'on additionne n fois un signal identique, son amplitude est multipliée par $n$

$$s_m(t) = s(t) + s(t + T) + s(t + 2T) + \ldots s(t + (n-1)T) = n \cdot s(t) \qquad (4)$$

En revanche, additionner n fois une variable aléatoire revient à multiplier par n sa variance et donc par $\sqrt{n}$ son

écart type

$$\sigma_m{}^2 = \sigma^2 + \sigma^2 + \sigma^2 + \ldots + \sigma^2 = n \cdot \sigma^2 \tag{5}$$

Donc

$$\sigma_m = \sqrt{n} \cdot \sigma^2 \tag{6}$$

Le rapport signal à bruit du signal intégré est donc amélioré d'un facteur 10.log(n) par rapport au rapport signal à bruit du signal non intégré.

$$SNR_m(t) = 20\log\left(\frac{ns(t)}{\sqrt{n}\sigma}\right) = 10\log(n) + SNR(t) \tag{7}$$

Afin d'étaler le spectre d'émission, de véhiculer une information ou encore de distinguer les impulsions, le signal transmis n'est pas simplement périodique mais est modulé selon un codage particulier. Par exemple, on peut modifier la position $\tau(i)$ de l'impulsion dans la fenêtre numéro *i* comme indiqué sur la figure 4.

Dans ce cas, le mécanisme de découpage et de moyenne décrit précédemment ne fonctionnerait pas puisque l'impulsion n'est pas toujours « au même endroit » dans la fenêtre de la PRP.

D'une façon plus générale, le signal reçu peut s'écrire:

$$r(t) = \sum_{i=0}^{n-1} \delta(t + iT + \tau_i).A_i.p(t) + b(t) \tag{8}$$

Avec

- $[\tau_0 \ldots \tau_{n-1}]$ : un code de positions avec $0 < \tau_i < T$
- $[A_0 \ldots A_{n-1}]$ : un code de polarité avec $A_i = +/- 1$
- p(t) : un signal décrivant l'impulsion fondamentale reçue
- b(t) : un bruit blanc

Pour effectuer la réception d'un signal codé, on réalise la corrélation du signal reçu avec la séquence attendue a(t)

$$\alpha(t) = \sum_{i=0}^{n-1} \delta(t + iT + \tau_i).A_i \tag{9}$$

De ce point de vue, la sommation simple comme illustré à la figure 3 peut être interprétée comme le cas particulier d'une corrélation avec un peigne de Dirac.

On obtient le signal intégré

$$r_m(t) = \int_{-\infty}^{\infty} r(u).\alpha(u - t)du \tag{10}$$

En particulier

$$r_m(0) = \sum_{i=0}^{n-1} A_i{}^2.p(0). + \sum_{i=0}^{n-1} A_i.b(t + iT + \tau_i). \tag{11}$$

Le rapport signal à bruit du signal intégré est par définition le rapport entre l'espérance et l'écart type du signal intégré :

$$SNR(0) = 20\log\left(\frac{E\{r_m(0)\}}{\sqrt{\mathrm{var}\{r_m(0)\}}}\right) = 20\log\left(\frac{\sum_{i=0}^{n-1} A_i^{\,2}..}{\sqrt{\sum_{i=0}^{n-1}|A_i|.\sigma^2}} p(0)\right) = 20\log\left(\frac{np(0).}{.\sqrt{n}\sigma}\right) = SNR_0 + 10\log(n) \qquad (12)$$

On retrouve le même gain d'intégration que dans le cas de la moyenne simple.

En résumé, il n'y a pas de différence de principe entre le calcul de la moyenne d'un signal périodique ou la réception d'un signal codé par corrélation du point de vue du gain d'intégration.

Dans toute la suite, on se restreindra au cas particulier de l'intégration d'un signal périodique en gardant à l'esprit que les mêmes principes s'appliquent au cas plus général de la réception d'un signal codé par corrélation.

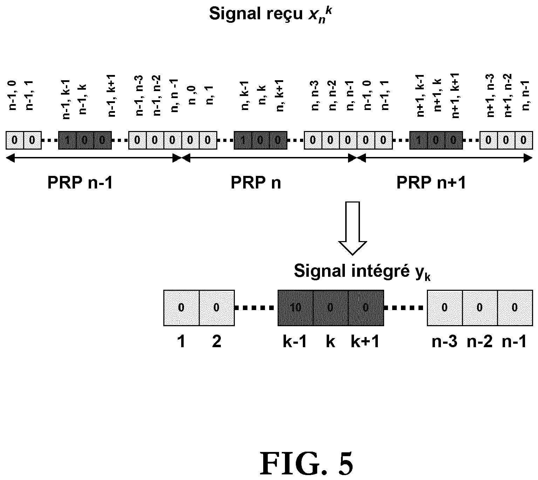

En se référant à la figure 5, on considère que le signal reçu est composé d'une succession ou d'un train de $N$ PRPs (N étant un nombre naturel entier), chacune des PRP comportant $K$ échantillons (K étant un nombre naturel entier). Un échantillon $x_n^k$ correspond donc dans ce cas à l'échantillon numéro $k$ (aussi appelé phase) de la PRP numéro $n$ avec $k$ compris entre 0 et $K$-1 et $n$ compris entre 0 et $N$-1. La date de l'échantillon $x_n^k$ est simplement

$$t_n^k = n.T + k.dt = (K.n + k).dt \qquad (13)$$

Le signal intégré représenté en dessous du train de $N$ PRPs et qui représente une durée T égale à la PRP, comporte $K$ échantillons numérotés de 0 à $K$-1. L'échantillon $y_k$ du signal intégré est donc simplement

$$y_k = \sum_{n=0}^{N} x_n^k \qquad (14)$$

Les formules précédentes ont montré que le gain de traitement obtenu par intégration croît selon une loi en 10log(N), où $N$ est le nombre d'intégrations. Afin d'augmenter la portée d'un dispositif ULB il convient donc d'augmenter le nombre d'intégrations, c'est-à-dire le nombre d'impulsions transmises. Précisément, on montre que pour augmenter la portée d'un facteur $\alpha$, il faut multiplier le nombre d'impulsions par $\alpha^2$. En pratique, pour obtenir de grandes portées, le nombre d'impulsions à intégrer devient vite très grand. Par exemple, compte tenu des différentes pertes du système et de la portée à atteindre (environ 100 m), le nombre d'impulsions à intégrer peut atteindre 65000.

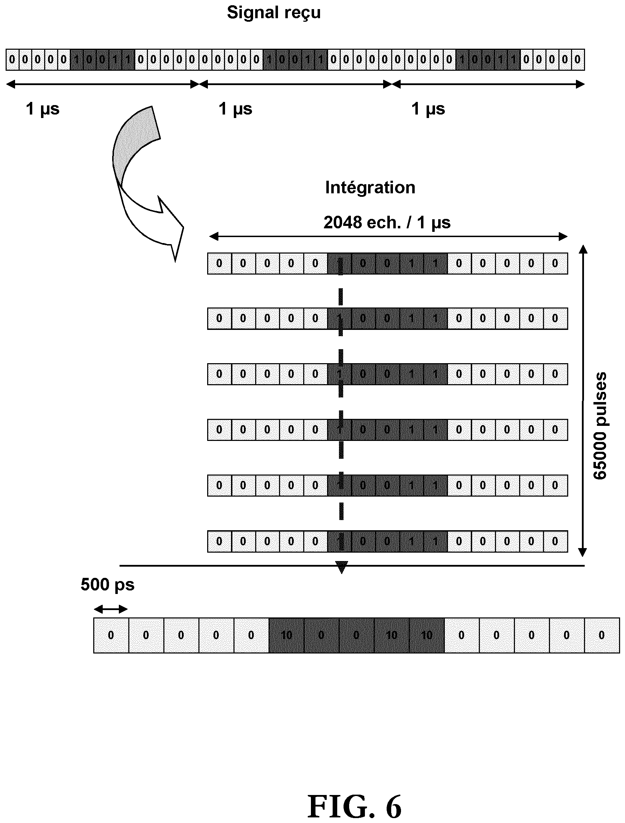

Le problème qui se pose lors d'une intégration d'un très grand nombre d'impulsions, est que, pour rester efficace, le mécanisme d'intégration doit additionner des impulsions en phase. Pour comprendre ce que cela signifie, on peut considérer le signal numérisé comme illustré sur la figure 6. Le signal reçu, une succession de PRPs, possède par exemple une périodicité de 1 μs (horloge de l'émetteur) et, s'il est découpé selon la même périodicité par le récepteur, les échantillons représentés en dessous ayant la même phase se retrouvent alignés. Dans ce cas, la sommation s'effectuera parfaitement.

En revanche, lorsque le nombre d'impulsions augmente, la durée d'intégration s'allonge et la dérive d'horloge entre l'émetteur et le récepteur devient alors un paramètre très sensible. Par exemple, si la PRP a une durée de 1μs, l'intégration de 65000 impulsions dure donc 65000 x 1μs = 65 ms. Pour conserver un alignement au niveau de l'échantillon (c'est-à-dire à 500 ps près), il faut que la dérive d'horloge soit inférieure à

$$\delta < \frac{500\,ps}{65000 \times 1\mu s} = 0.007\,ppm \qquad (15)$$

Or les meilleurs quartz du marché ont une dérive de l'ordre de 1 ppm. En particulier, ces dérives proviennent par exemple d'un changement de température, notamment lors de la mise en marche, du vieillissement du quartz, de chocs mécaniques subi par le quartz ou encore de variations dans la tension d'alimentation du quartz.

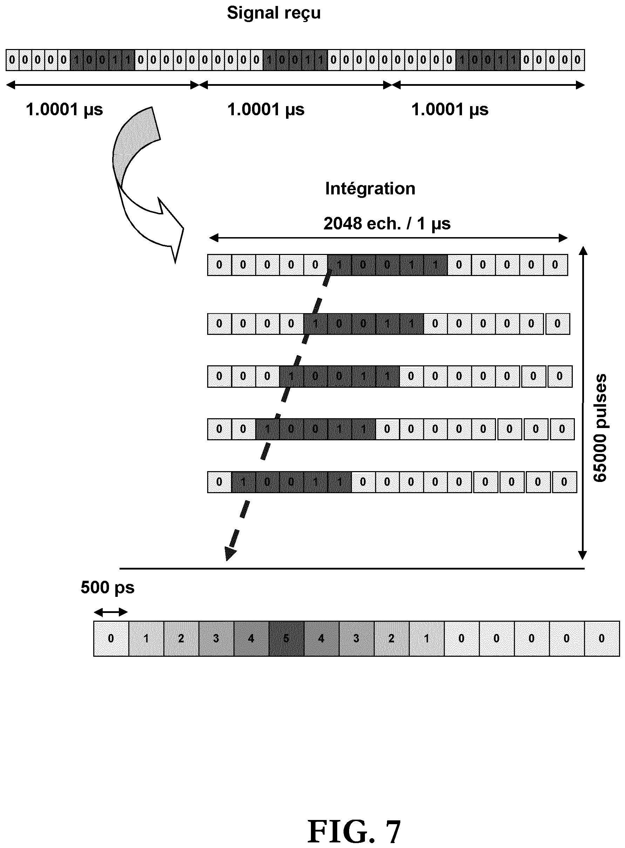

La conséquence d'une intégration en présence d'une dérive d'horloges est présentée sur la figure 7. On constate que dans ce cas, le signal intégré est étalé et le gain d'intégration n'est plus optimal.

On comprend donc que la connaissance de la dérive d'horloge entre l'émetteur et le récepteur est importante pour pouvoir augmenter la portée d'un système ULB.

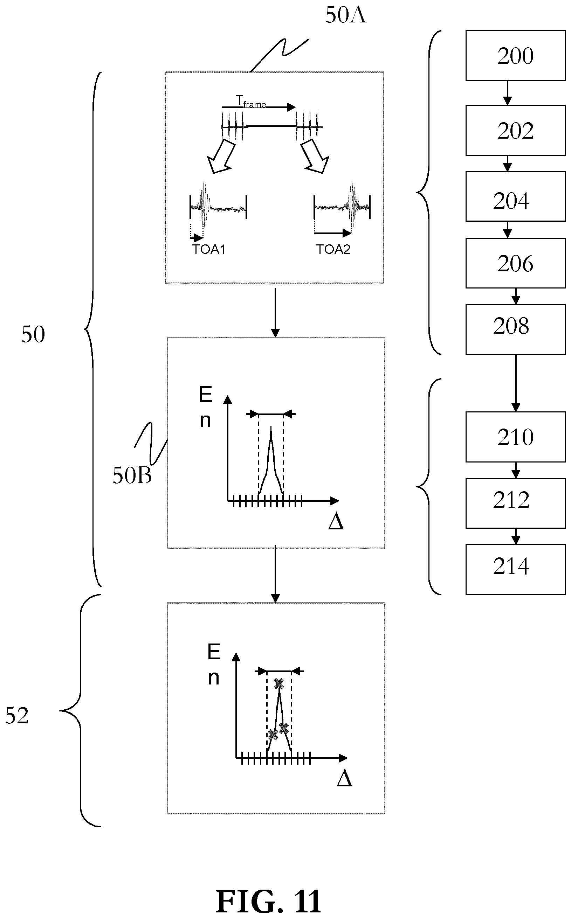

On connaît du document EP 1 903 702 A1 un procédé d'estimation de la dérive entre deux horloges d'un système ULB basé sur une approche en treillis permettant ensuite une intégration cohérente des divers échantillons reçus. Selon cette approche, on effectue des sommations partielles qui doivent toutes être mémorisées dans une mémoire. Puis, par un processus d'intégration à trajets multiples (voir figure 11 de ce document), on réalise un grand nombre de sommations pour ensuite les comparer entre eux, le meilleur est ensuite sélectionné sur critère d'énergie par exemple. Cependant, l'utilisation du treillis requiert des ressources matérielles importantes et une quantité de traitement *a posteriori* non négligeable. En effet, si on utilise par exemple 2048 points dans la PRP et un décalage maximal de +/-128 échantillons pour 65535 PRP (soit 128 segments différents), les traitements se composent de

- construction des sommes partielles : 2048 x 65535=134millions additions
- stockage des sommes partielles : 2048 x 128=262 000 mots de mémoire
- parcours du treillis : 2048 x 128 x 256 = 67millions additions
- stockage des résultats du parcours = 256 x 2048 = 524 000 mots
- recherche du meilleur parcours : 524 000 mots à traiter

De plus, les opérations de parcourir le treillis et de rechercher le meilleurs parcours s'effectuent après réception complète du signal ce qui peut être problématique pour un traitement en temps réel.

Enfin, dans le but de limiter les ressources matérielles nécessaires, la recherche de la dérive ne s'effectue pas sur l'ensemble des phases k mais seulement sur un nombre limité d'entre elles. Cette option prévue dans le document précité suppose néanmoins que l'émetteur et le récepteur aient été synchronisés préalablement, c'est-à-dire que le récepteur « sache » dans quelle partie de la PRP se trouve l'impulsion. Or cette approche n'est pas tenable dans les systèmes à très faibles rapports signaux à bruit car la synchronisation ne peut se faire qu'après l'estimation de la dérive: il n'est pas possible de synchroniser le signal si celui-ci n'a pas été correctement intégré (mauvais rapport signal à bruit) et il n'est pas possible d'intégrer correctement un signal si on ne connaît pas la dérive d'horloge entre l'émetteur et le récepteur.

On connaît aussi du document «Timing tracking algorithms for impulse radio (IR) based ultra wideband (UWB) systems » (Li Huang et al. 2007 3rd International conférence on wireless communications, networking, and mobile computing - WiCOM '07 21-25 Sept. 2007 Shanghai, China, 21 septembre 2007 (2007-09-21), 25 septembre 2007 (2007-09-25), pages 570-573, XP002662469, 2007 3rd International conférence on wireless communications, networking, and mobile computing, WiCOM '07 IEEE Piscataway, NJ, USA) un procédé associé à un dispositif de corrélation, permettant de réduire la consommation en énergie en mettant en marche le récepteur uniquement au moment où l'impulsion est entrante. Ce procédé nécessite de synchroniser le traitement de l'impulsion avec sa réception. Cependant, même si la synchronisation est parfaite au début du procédé, la dérive d'horloge entraîne une désynchronisation entre la réception et le traitement de l'impulsion au cours du temps.

Afin de palier cette désynchronisation, le récepteur cherche dans quelle partie de la PRP se trouve l'impulsion. A cet effet, le procédé utilise une architecture où trois instants de synchronisation sont considérés en parallèle.

Afin d'améliorer le rapport signal sur bruit et les performances de l'approche, le procédé nécessite l'insertion d' « impulsion pilotes » dans la PRP. Les impulsions pilotes sont échantillonnées aux trois instants de synchronisation. Le procédé compare ensuite les énergies contenues par les impulsions pilotes aux trois instants de synchronisation. L'instant de synchronisation sélectionné pour le traitement de l'impulsion est celui contenant le maximum d'énergie.

Cependant l'insertion d'impulsion pilotes augmente le nombre d'opérations nécessaires et complexifie le procédé.

La présente invention vise à palier ces inconvénients précités, au moins en partie en proposant un procédé d'intégration de signaux émis depuis un émetteur vers au moins un récepteur Ultra Large Bande (ULB) qui ne nécessite que peu de ressources matérielles.

A cet effet, la présente invention propose un procédé d'intégration de signaux émis depuis un émetteur vers au moins un récepteur Ultra Large Bande, caractérisé en ce que

- on initialise au préalable la mesure en estimant une dérive d'horloge $\Delta DH_{init}$ initiale entre l'émetteur et le récepteur,
- on réalise une boucle itérative lors de laquelle :

  ◦ on réalise une étape d'intégration d'au moins un signal primaire reçu composé d'au moins deux échantillons lors de laquelle on réalise au moins une première intégration utilisant la dérive d'horloge estimée et au moins une deuxième et une troisième intégration respectivement augmentée et diminuée d'une valeur prédéterminée,
  ◦ on sélectionne parmi lesdites au moins trois intégrations, celle qui maximise un critère de qualité, et on adapte, le cas échéant la dérive d'horloge à celle correspondant à l'intégration sélectionnée.

Selon une ou plusieurs caractéristiques du circuit convertisseur, prises seules ou en combinaison :
Lors de l'étape d'intégration, on réalise par exemple au moins trois intégrations d'un seul signal primaire reçu en utilisant respectivement la dérive d'horloge estimée $\Delta DH_i$, ainsi que la dérive d'horloge estimée respectivement augmentée et diminuée d'une valeur prédéterminée $\Delta DH_i + \delta_1$ et $\Delta DH_i - \delta_2$, $\Delta DH_i$ étant la dérive d'horloge de la boucle i, i étant un nombre naturel, $\delta_1$ et $\delta_2$ correspondant respectivement à des dérives d'horloge prédéterminées élémentaires, et on sélectionne parmi les trois intégrations, celle qui maximise un critère de qualité, et on adapte, le cas échéant la dérive d'horloge $\Delta DH_{i+1}$ à celle correspondant à l'intégration sélectionnée.
Selon un aspect, lors de l'étape d'initialisation

- on reçoit au moins un signal primaire émis par l'émetteur,
- on réalise sur ce signal primaire j+1 intégrations différentes avec respectivement une dérive d'horloge $\Delta DH_j$ si situant dans une gamme discrète de dérives d'horloge $\Delta DH_j = \Delta DH + j *\delta$, $\Delta DH$ est une valeur de dérive d'horloge prédéterminée, j étant un nombre entier et $\delta$ correspondant à une dérive d'horloge prédéterminée élémentaire,
- on sélectionne comme dérive d'horloge $\Delta DH_{init}$ initiale celle qui maximise un critère de qualité.

Selon un autre aspect, lors de l'étape d'initialisation :

- on reçoit au récepteur un premier signal primaire émis par l'émetteur pendant une durée inférieure à un temps caractéristique de la dérive d'horloge de l'émetteur et du récepteur, on réalise une intégration sur ce premier signal primaire et on mesure son temps d'arrivée
- après une période de temps $\theta$, on reçoit au récepteur un second signal primaire pendant une durée inférieure à un temps caractéristique de la dérive d'horloge de l'émetteur et du récepteur, on réalise une intégration sur ce second signal primaire et on mesure son temps d'arrivée
- on détermine une estimation de la dérive d'horloge $\Delta DH_{init}$ initiale à partir de l'exploitation d'une différence entre les temps d'arrivée.

Selon encore un autre aspect, lors de l'étape d'initialisation :

- on émet un premier signal primaire pendant une durée inférieure à un temps caractéristique de la dérive d'horloge de l'émetteur et du récepteur,
- on reçoit et on réalise une intégration sur ce premier signal primaire,
- après une période de temps $\theta$, on émet un second signal primaire pendant une durée inférieure à un temps caractéristique de la dérive d'horloge de l'émetteur et du récepteur, on reçoit ce second signal primaire et on réalise une intégration sur ce second signal primaire,
- on détermine un intervalle de dérives d'horloge $\Delta DH_j$ initiales à partir de l'intégration des premiers et seconds échantillons,
- on reçoit au moins un troisième signal primaire émis par l'émetteur,
- on réalise sur ce troisième signal j+1 intégrations différentes avec respectivement une dérive d'horloge $\Delta DH_j$ si situant dans l'intervalle déterminé $\Delta DH_j = \Delta DH + j *\delta$, $\Delta DH$ est une valeur de dérive d'horloge prédéterminée, j étant un nombre naturel et $\delta$ correspondant à une dérive d'horloge prédéterminé élémentaire,
- on sélectionne comme dérive d'horloge $\Delta DH_{init}$ initiale celle qui maximise un critère de qualité.

Selon une variante les dérives d'horloge prédéterminées élémentaires sont égaux.
On peut par exemple prévoir qu'au moins une des deux dérives d'horloge prédéterminées élémentaires correspondent à un décalage d'un échantillon $t_{éch}$ pour la durée d'intégration $T_{intégration}$.
Selon un mode de réalisation, on réalise les intégrations par sommation de la valeur d'un échantillon dans un emplacement de mémoire assigné et on applique la correction de la dérive d'horloge par décalage d'un pointeur d'adresse du mémoire.
Selon un autre mode de réalisation, on réalise les intégrations par corrélation de la valeur d'un échantillon dans un emplacement de mémoire assigné et on applique la correction de la dérive d'horloge par décalage d'un pointeur d'adresse du mémoire.
Selon un aspect, on réalise les intégrations par sommation de la valeur d'un échantillon dans un emplacement de mémoire assigné et on applique la correction de la dérive d'horloge par décalage de l'horloge de l'émetteur.
Selon un mode de réalisation on réalise en parallèle lesdites au moins trois intégrations du signal primaire reçu en utilisant respectivement la dérive d'horloge estimée $\Delta DH_i$, ainsi que la dérive d'horloge estimée respectivement augmentée et diminuée d'une valeur prédéterminée $\Delta DH_i + \delta_1$ et $\Delta DH_i - \delta_2$.
En alternative, on réalise de façon séquentielle au moins trois intégrations de trois signaux primaires reçus successivement en utilisant respectivement une dérive d'horloge estimée, ainsi que cette dérive d'horloge estimée respectivement augmentée et diminuée d'une valeur prédéterminée.

Le critère de qualité correspond par exemple à un critère ou une combinaison des critères choisit du groupe suivant : le rapport signal sur bruit S /N, l'amplitude, l'énergie ou la puissance.

L'invention a également pour objet un dispositif d'intégration de signaux émis depuis un émetteur vers au moins un récepteur Ultra Large Bande, caractérisé en ce qu'il comprend des moyens configurés

- pour initialiser la mesure en estimant une dérive d'horloge $\Delta DH_{init}$ initiale entre l'émetteur et le récepteur,
- pour réaliser une boucle itérative lors de laquelle :

    o on réalise une étape d'intégration d'au moins un signal primaire reçu composé d'au moins deux échantillons lors de laquelle on réalise au moins une première intégration utilisant la dérive d'horloge estimée et au moins une deuxième et une troisième intégration respectivement augmentée et diminuée d'une valeur prédéterminée,

on sélectionne parmi lesdites au moins trois intégrations, celle qui maximise un critère de qualité, et on adapte, le cas échéant la dérive d'horloge à celle correspondant à l'intégration sélectionnée.

Selon une ou plusieurs caractéristiques du système électronique, prises seules ou en combinaison :
Le dispositif comprend par exemple des moyens configurés pour

◦ réaliser au moins trois intégrations du signal primaire reçu en utilisant respectivement la dérive d'horloge estimé $\Delta DH_i$, ainsi que la dérive d'horloge estimé respectivement augmentée et diminuée d'une valeur prédéterminée $\Delta DH_i + \delta_1$ et $\Delta DH_i - \delta_2$, $\Delta DH_i$ étant la drive d'horloge de la boucle i, i étant un nombre naturel, $\delta_1$ et $\delta_2$ correspondant respectivement à des dérives d'horloge prédéterminées élémentaires,
◦ sélectionner parmi les trois intégrations, celle qui maximise un critère de qualité, et le cas échéant la dérive d'horloge $\Delta DH_{i+1}$ pour adapter à celle correspondant à l'intégration sélectionnée.

Ces moyens peuvent en outre être configurés pour

- recevoir au moins un signal primaire émis par l'émetteur,
- réaliser sur ce signal primaire j+1 intégrations différentes avec respectivement une dérive d'horloge $\Delta DH_j$ si situant dans une gamme discrète de dérives d'horloge $\Delta DH_j = \Delta DH + j * \delta$, $\Delta DH$ est une valeur de dérive d'horloge prédéterminée, j étant un nombre entier et $\delta$ correspondant à une dérive d'horloge prédéterminé élémentaire,
- sélectionner comme dérive d'horloge $\Delta DH_{init}$ initiale celle qui maximise un critère de qualité.

Selon un autre aspect, le dispositif comprend au moins une mémoire et il est configuré pour réaliser les intégrations par sommation de la valeur d'un échantillon dans un emplacement de mémoire assigné et pour appliquer la correction de la dérive d'horloge par décalage d'un pointeur d'adresse du mémoire.

D'autres avantages et caractéristiques apparaîtront à la lecture de la description de l'invention, ainsi que des figures suivantes sur lesquelles :

- la figure 1 est un schéma illustratif d'un émetteur et d'un récepteur ULB ayant des horloges non synchronisés,
- la figure 2 est un chronogramme schématique pour illustrer une mesure de distance,
- la figure 3 est un schéma simplifié pour illustrer le mécanisme d'intégration de signal au niveau du récepteur,
- la figure 4 est un chronogramme schématique montrant un exemple de codage d'un signal en position,
- la figure 5 est un schéma explicatif du signal primaire de PRPs reçu et du signal intégré,
- la figure 6 est un exemple montrant un exemple d'intégration d'un signal primaire de PRPs reçus sans dérive d'horloge entre l'émetteur et le récepteur,
- la figure 7 est un exemple montrant un exemple d'intégration d'un signal primaire de PRPs reçus avec dérive d'horloge entre l'émetteur et le récepteur,

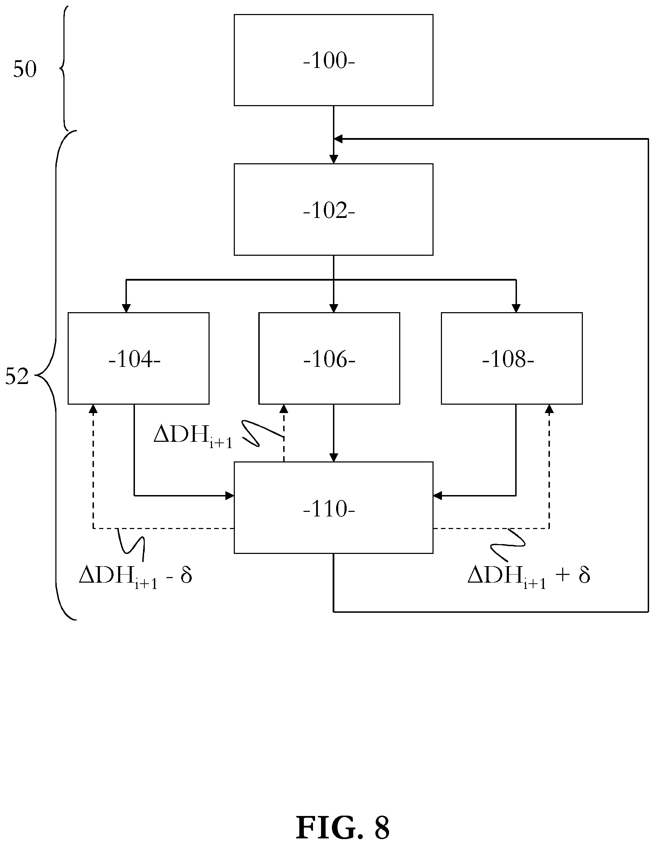

- la figure 8 est un organigramme montrant des étapes du procédé selon l'invention en général,

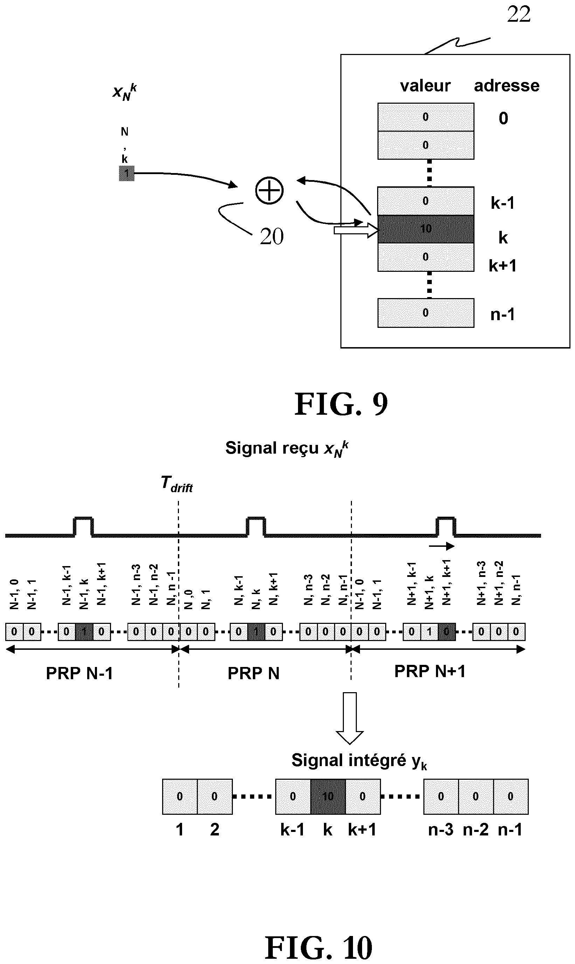

- la figure 9 est un schéma synoptique pour illustrer un mode de réalisation possible pour réaliser l'intégration des signaux primaires de PRPs,
- la figure 10 est un schéma illustratif montrant un exemple d'intégration selon le procédé selon l'invention,
- la figure 11 est un organigramme montrant certaines étapes du procédé selon l'invention selon un premier mode de réalisation,

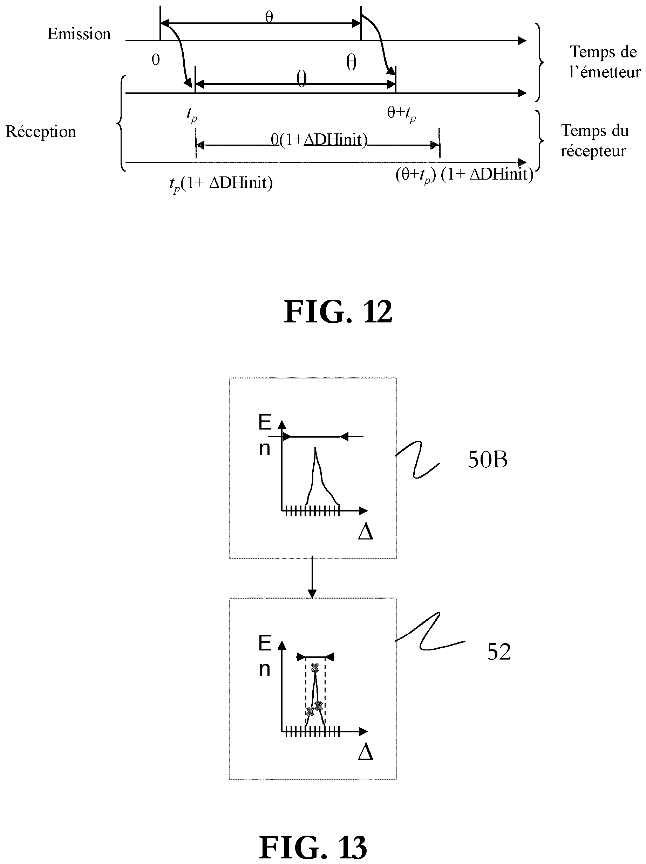

- la figure 12 est un chronogramme explicatif pour illustrer l'estimation de la dérive d'horloge entre l'émetteur et le récepteur par une mesure du temps d'arrivé d'un signal primaire de PRPs,
- la figure 13 est un organigramme montrant certaines étapes du procédé selon l'invention selon un second mode de réalisation, et

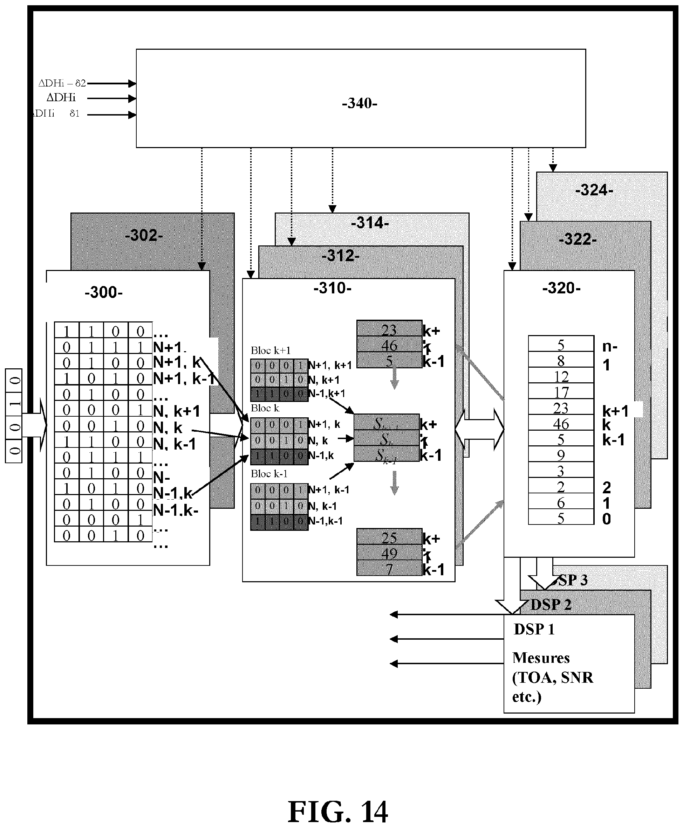

- la figure 14 est un schéma synoptique d'un exemple d'un dispositif d'intégration pour la mise en oeuvre du procédé selon l'invention.

Sur toutes les figures, les mêmes éléments sont référencés par les mêmes numéros.

La figure 8 est un organigramme montrant des étapes du procédé selon l'invention en général

Le procédé d'intégration de signaux émis depuis un émetteur vers au mois un récepteur Ultra Large Bande (ULB) se compose essentiellement de deux phases principales 50 et 52, une première, la phase d'initialisation 50, lors de la quelle on recherche la valeur de la dérive d'horloge entre l'émetteur et le récepteur, et une deuxième phase, une phase de poursuite 52, lors de laquelle on poursuit la valeur de la dérive d'horloge ou plus exactement la variation de la dérive d'horloge pour corriger en temps réel la dérive d'horloge prise en compte pour l'intégration de préférence cohérente d'un signal primaire .

Le signal primaire est formé de N PRPs comprenant chacune K échantillons. Un échantillon du signal primaire peut donc être indicé par $x_n^k$ avec

- $0 \leq n \leq N-1$
- $0 \leq k \leq K-1$

Un signal intégré correspond par exemple à la moyenne du signal sur les N PRPs ou à la corrélation du signal sur les N PRPs, le signal intégré est obtenu en effectuant N intégrations des PRPs du signal primaire et il comprend K échantillons.

Plus en détail, lors d'une première étape 100, on initialise la mesure en estimant une dérive d'horloge $\Delta DH_{init}$ initiale entre l'émetteur et le récepteur.

Comme on va le voir par la suite, cette estimation de la dérive d'horloge $\Delta DH_{init}$ initiale peut se faire de différentes manières.

Puis, la seconde phase 52 comprend la réalisation une boucle itérative à plusieurs étapes :

Lors d'une étape 102, on reçoit un signal primaire de N PRP's composé de K échantillons, K étant un nombre naturel supérieur ou égal à 1,

Le récepteur est en marche en permanence, ainsi le signal primaire est intégré en continu. Ceci permet d'une part d'éviter la désynchronisation entre la réception du signal primaire et son traitement, et d'autre part de pouvoir traiter la totalité du signal primaire.

Puis, lors des étapes 104, 106 et 108, on réalise au moins trois intégrations de préférence cohérentes du signal primaire reçu en utilisant respectivement la dérive d'horloge estimée $\Delta DH_i$ pour l'étape 106, ainsi que la dérive d'horloge estimée respectivement augmentée et diminuée d'une valeur prédéterminé $\Delta DH_i + \delta_1$ pour l'étape 104 et $\Delta DH_i - \delta_2$ pour l'étape 108 Pour chacune des intégrations on peut utiliser la totalité du signal primaire. En alternative, on peut aussi réaliser ces intégrations de façon non-cohérente.

$\Delta DH_i$ est la dérive d'horloge de la boucle i et bien sûr, pour i=0, $\Delta DH_0 = \Delta DH_{init}$, i étant un nombre naturel.

$\delta_1$ et $\delta_2$ correspondent respectivement à des dérives d'horloge prédéterminées élémentaires.

Selon un mode de réalisation, les dérives d'horloge prédéterminées élémentaires $\delta_1$ et $\delta_2$ sont égaux à une dérive d'horloge élémentaire $\delta$.

$\delta$ correspond par exemple à la valeur de dérive produisant un décalage d'un échantillon $t_{éch}$ pour la durée d'intégration $T_{intégration}$ :

$$\delta = t_{éch} / T_{intégration}$$

Comme cela est montré sur la figure 8, on réalise en parallèle et simultanément lesdites au moins trois intégrations cohérentes 104, 106 et 108.

Selon une variante, on peut réaliser ces étapes 104, 106 et 108 aussi de façon séquentielle ce qui présente par rapport à la figure 8 l'avantage que l'intégration peut être réalisée par les mêmes composants électroniques, nécessitant donc encore moins de ressources.

Selon encore une autre variante, on peut réaliser les étapes 104, 106 et 108 sur trois signaux primaires reçus et intégrés de façon séquentielle, c'est-à-dire on réalise de façon séquentielle au moins trois intégrations de trois signaux primaires reçus successivement en utilisant respectivement une dérive d'horloge estimée $\Delta DH_i$, ainsi que cette dérive d'horloge estimée respectivement augmentée et diminuée d'une valeur prédéterminée $\Delta DH_{i+1} + \delta_1$ et $\Delta DH_{i+2} - \delta_2$.

Ceci présente également par rapport à la figure 8 l'avantage que l'intégration peut être réalisée par les mêmes composants électroniques, nécessitant donc moins de ressources.

Pour la phase de poursuite 52, on a représenté sur la figure 8 trois étapes d'intégration 104, 106 et 108. Toutefois, par exemple en fonction des paramètres d'horloge, voir de l'environnement où est mis en oeuvre le procédé, on peut être amené à augmenter le nombre d'intégration , par exemple au nombre de cinq, avec des dérives d'horloge $\Delta DH_i + 2\delta$, $\Delta DH_i + \delta$, $\Delta DH_i$, $\Delta DH_i - \delta$ et $\Delta DH_i - 2\delta$.

Puis lors de l'étape 110, on sélectionne parmi les trois intégrations, celle qui maximise un critère de qualité. Ce critère de qualité correspond par exemple au rapport signal sur bruit S /N, l'amplitude, l'énergie et/ou puissance ou encore une combinaison de ces différents paramètres. Par exemple on sélectionne celle possédant un maximum d'énergie et on adapte, le cas échéant la dérive d'horloge $\Delta DH_{i+1}$ à celle correspondant à l'intégration sélectionnée.

Ainsi, supposons qu'à la boucle i, l'intégration de l'étape 104 avec $\Delta DH_i - \delta$ ait donné une intégration ayant par exemple en tant que critère de qualité un maximum d'énergie par rapport aux intégrations 106 et 108, alors, pour la boucle suivante i+1, on choisit $\Delta DH_{i+1} = \Delta DH_i - \delta$, de sorte que les intégrations de la boucle i+1 se font avec des dérives d'horloges adaptées, à savoir pour l'étape 104 $\Delta DH_{i+1} - \delta = \Delta DH_i - 2\delta$, pour l'étape 106 $\Delta DH_{i+1} = \Delta DH_i - \delta$ et pour l'étape 108 avec $\Delta DH_{i+1} + \delta = \Delta DH_i$.

Il en résulte que l'intégration peut se faire en temps réel avec de faibles ressources tout en tenant compte de la dérive d'horloge entre l'émetteur et le récepteur.

Ceci est représenté sur la figure 9, montrant un exemple de réalisation d'une partie d'un dispositif d'intégration selon le procédé décrit ci-dessus.

On y a représenté de façon succincte un échantillon k d'un signal PRP n, donc l'échantillon (n,k) selon les définitions exposées ci-dessus.

Cet échantillon (n,k) est dirigé par un pointeur 20 vers une mémoire 22 contenant le signal intégré $y_k$, et plus particulièrement à l'adresse k.

Comme on peut le voir sur la figure, dans la solution proposée, le signal reçu n'est pas construit comme des sommes (intégrations) partielles, stockées et post traitées (parcours du treillis) ensuite pour arriver au signal intégré final, mais le signal primaire est intégré totalement sans passer par des sommes partielles et une étape de post-traitement.

La mémoire 22 contient le résultat du signal intégré et le pointeur d'adresse 20 désigne l'échantillon qui va être mis à jour.

En l'absence de dérive d'horloge, le pointeur d'adresse 20 est incrémenté pour chaque nouvel échantillon (n,k).

La présence d'une dérive d'horloges entre l'émetteur et le récepteur entraîne que, après une certaine durée $T_{drift}$, l'impulsion « glisse » de l'échantillon (n,k) vers l'échantillon (n,k+1) ou (n,k-1) selon le signe de la dérive comme illustré sur la figure 10.

Le mécanisme de compensation de la dérive d'horloge consiste alors simplement à décaler le pointeur d'adresse de la mémoire signal d'une valeur, si bien que le pointeur dirige l'échantillon (n,k) à l'adresse *k*+1 ou *k*-1 de la mémoire 22 selon la variation de dérive constaté.

On réalise donc les intégrations par sommation de la valeur d'un échantillon (n,k) dans un emplacement de mémoire assigné et on applique la correction de la dérive d'horloge par simple décalage d'un pointeur d'adresse du mémoire.

Si la dérive d'horloges est importante, après une nouvelle durée $T_{drift}$, un autre décalage se produira si bien que le pointeur d'adresse 20 de la mémoire signal 22 sera décalé de deux valeurs etc.

On comprend donc que grâce au procédé, on peut réaliser une intégration performante avec peu de ressources matérielles, ce qui permet une augmentation significative de la portée du dispositif d'intégration à cout réduit.

Selon une autre variante, on envisage qu'au lieu de décaler le pointeur 20 du récepteur, d'envoyer un signal de commande vers l'émetteur 1 forçant ce dernier de décaler son horloge H1 à lui d'une valeur de dérive d'horloge. Ainsi, on peut réaliser les intégrations par sommation de la valeur d'un échantillon k dans un emplacement de mémoire assigné sans décalage forcée du pointeur 20.

On va détailler par la suite la phase d'initialisation 50 en relation avec la figure 11 selon un premier mode de réalisation.

Selon ce premier mode de réalisation, on découpe la phase d'initialisation en deux sous-phases 50A et 50B, dont l'une 50A correspond au calcul de la dérive d'horloge à partir de la mesure des temps d'arrivée de l'impulsion TOA de deux signaux primaires pour aboutir à une estimation grossière de la dérive d'horloge et dont l'autre correspond à une analyse fine de signaux primaires intégrés de manière de préférence cohérente avec différentes dérives d'horloge dans une plage restreinte autour de l'estimation grossière.

Plus en détail, lors d'une étape 200, on émet un premier signal primaire pendant une durée inférieure à un temps caractéristique de la dérive d'horloge de l'émetteur et du récepteur. En effet, cette dernière condition permet de considérer que la dérive d'horloge lors de l'émission des premier signal primaire est négligeable, voir nulle.

Puis, pendant une étape 202, on reçoit et intègre préférentiellement de façon cohérente ce signal primaire et on mesure son temps d'arrivée.

Après une période de temps θ, connue de l'émetteur et du récepteur, on émet un second signal primaire lors d'une étape 204 pendant une durée inférieure à un temps caractéristique de la dérive d'horloge de l'émetteur et du récepteur.

Ensuite, pendant une étape 206, on reçoit et on intègre préférentiellement de façon cohérente ce second signal primaire et on mesure son temps d'arrivée.

Et lors d'une étape 208, on détermine un intervalle de dérives d'horloge $\Delta DH_j$ initiales à partir de l'exploitation d'une différence entre ces mesures de TOA.

En effet, comme on le voit sur la figure 12, cette approche exploite le temps d'arrivée entre deux émissions successives $TOA_1$ et $TOA_2$ de l'émetteur 1 et suppose que la durée « nominale » $\theta$ entre ces deux émissions soit connue du récepteur 2. Elle suppose également que l'émetteur ne soit pas trop éloigné du récepteur pour que, même en utilisant une mauvaise valeur de dérive d'horloge, le signal intégré soit quand même détectable. La pratique montre que cette dernière hypothèse est généralement bien vérifiée. Dans ce cas, la mesure des deux temps d'arrivée successifs $TOA_1$ et $TOA_2$ permet de calculer directement la valeur de dérive d'horloge ou pour le moins un intervalle de dérives d'horloge $\Delta DH_j$ initiales.

Pour le comprendre, supposons que la durée entre les deux émissions soit égale à $\theta$, que le temps de propagation entre l'émetteur 1 et le récepteur 2 soit égale à $t_p$ et la dérive d'horloge du récepteur par rapport à l'émetteur égale à $\Delta DH_{init}$. Comme le montre la figure 12, les temps d'arrivée mesurés $TOA_1$ et $TOA_2$ par l'horloge de l'émetteur sont séparés d'un délai $\theta$. En revanche, du fait de la dérive d'horloge, lorsqu'ils sont mesurés par l'horloge du récepteur le temps constaté entre les deux temps d'arrivée sera de « dilaté » et vaudra $\theta(1+\Delta DH_{init})$. Puisque le récepteur connaît la valeur $\theta$, il peut en déduire la valeur de dérive $\Delta DH_{init}$.

En fonction en particulier de la qualité des signaux reçus et de l'ampleur de la dérive d'horloge $\Delta DH_{init}$, soit $\Delta DH_{init}$ peut être déterminée directement avec assez de précision, soit on aboutit seulement à un intervalle de dérives d'horloge $\Delta DH_j$ initiales, donc somme toute une sorte d'estimation grossière de la dérive d'horloge.

Dans ce dernier cas, il s'avère intéressant de réaliser une estimation fine de la dérive d'horloge $\Delta DH_{init}$ à l'intérieur de intervalle de dérives d'horloge $\Delta DH_j$ initiales.

Pour ce faire, lors d'une étape 210, on reçoit un troisième signal primaire émis par l'émetteur.

Puis, lors de l'étape 212, on réalise sur ce troisième signal primaire j+1 intégrations différentes avec respectivement une dérive d'horloge $\Delta DH_j$ se situant dans l'intervalle déterminé $\Delta DH_j = \Delta DH + j*\delta$, j étant un nombre entier et $\delta$ correspondant à une dérive d'horloge prédéterminée élémentaire. $\Delta DH$ est une valeur de dérive d'horloge prédéterminée et dans cas précis par exemple la valeur la plus faible dans un intervalle de dérives d'horloge $\Delta DH_j$ initiales.

Enfin, lors de l'étape 214, on sélectionne comme dérive d'horloge $\Delta DH_{init}$ initiale celle des $\Delta DH_j$ correspondant à l'intégration des signaux primaires qui maximise un critère de qualité. Ce critère de qualité correspond par exemple au rapport signal sur bruit S /N, l'amplitude, l'énergie et/ou puissance ou encore une combinaison de ces différents paramètres.

Par la suite, le procédé passe à la phase 52 de poursuite décrit ci-dessus.

Selon une première variante, on envisage de réaliser les étapes de la sous-phase 50A pour aboutir directement à une valeur de $\Delta DH_{init}$ sans passer par la sous-phase 50B, ce qui ne nécessite donc que la mesure de deux signaux primaires et est très rapide à réaliser.

Selon une deuxième variante schématisée sur la figure 12, on réalise une recherche exhaustive des valeurs de dérive possibles / probables $\Delta DH_{init}$, ce qui consiste à réaliser la sous-phase 50B dans un intervalle de dérive d'horloge plus élargi. Dans ce cas $\Delta DH$ est une valeur de dérive d'horloge choisie quelconque, par exemple égal à zéro.

En effet, étant donné la nature discrète des acquisitions et de la tolérance des quartz servant à fabriquer les signaux d'horloge, le nombre possible de dérives observables est fini. Par exemple, dans un système testé par le Demandeur, ce nombre était de 256. La recherche exhaustive consiste à tester séquentiellement toutes les valeurs possibles de dérive d'horloge et à retenir celle correspondant à la plus grande métrique, c'est-à-dire celle qui maximise un critère de qualité. Ce critère de qualité correspond par exemple au rapport signal sur bruit S /N, l'amplitude, l'énergie et/ou puissance ou encore une combinaison de ces différents paramètres. Par exemple, on peut choisir la valeur de dérive conduisant à la plus grande énergie du signal intégré. Ce procédé s'apparente à une analyse spectrale : chaque valeur de dérive testée correspond à une fréquence de répétition différente, le balayage complet de toutes les valeurs revient donc à tracer le spectre d'un signal.

Toutefois, cette approche peut demander un temps relativement long selon le nombre de valeurs à tester. En revanche, si le dispositif de réception comprend plusieurs blocs d'intégration plusieurs valeurs peuvent être testées en même temps pour chaque signal reçu.

Dans ce cas, si un signal primaire est émis toutes les 256 ms et le récepteur comprend trois blocs d'intégration. Le temps nécessaire à une recherche exhaustive est donc de 256 valeurs /3 blocs x 256 ms = 21.8 secondes.

La figure 14 montre un schéma synoptique d'un exemple de réalisation d'un dispositif d'intégration de signaux émis depuis un émetteur vers au mois un récepteur Ultra Large Bande (ULB) pour la mise en oeuvre du procédé décrit ci-dessus.

Le récepteur comporte différents blocs.

Les signaux primaires sont reçus puis par exemple numérisés sur 1 bit. Ces signaux sont chargés en alternance dans deux mémoires tampon 300 et 302, de sorte que lorsqu'une mémoire tampon 300 par exemple reçoit des signaux numérisés, l'autre peut être déchargée vers trois additionneurs 310, 312 et 314, ce qui garantit une rapidité de traitement. Chaque mémoire tampon 300, 302 contient les échantillons $x_n{}^k$ du signal numérisé et sert à collecter suffisamment d'échantillons pour pouvoir former des blocs.

Ces mémoires 300, 302 ont pour rôle d'accumuler suffisamment d'échantillons afin d'avoir à disposition plusieurs PRP (on notera $m$ le nombre de PRP stockées en mémoire tampon), ceci en vue d'effectuer des opérations en parallèle sur les PRP.

Des blocs d'échantillons sont ensuite prélevés de la mémoire tampon 300 ou 302 et chargés vers les trois additionneurs 310, 312 et 314.

Un bloc $k$ contient tout les échantillons $k$ des $m$ PRP stockées dans la mémoire tampon:

$$[x_N{}^k \ x_{N+1}{}^k \dots \ x_{N+m-1}{}^k],$$ à savoir m échantillons. Au total ce sont m blocs k contigus qui sont chargés en parallèle vers les additionneurs. L'additionneur ne stocke pas ces valeurs mais calcule les sommes partielles $S_k$ de chaque bloc

$k$ à mesure que les échantillons $x_N{}^k$ sont chargés vers les additionneurs 310, 312 et 314. Les trois additionneurs 310, 312 et 314 se distinguent par le fait d'appliquer respectivement la dérive d'horloge estimé $\Delta DH_i$, ainsi que la dérive d'horloge estimé respectivement augmentée et diminuée d'une valeur prédéterminé $\Delta DH_i + \delta$ et $\Delta DH_i - \delta$ dans le cadre de la phase de poursuite 52 du procédé.

En parallèle, les $m$ échantillons contigus $y_k$ correspondant aux $m$ blocs $k$ sont chargés dans une mémoire signal 320, 322 ou 324 respectivement associées aux additionneurs 310, 312 et 314. Chaque mémoire signal 320, 322 ou 324 contient le résultat du signal intégré et est mise à jour récursivement.

En outre, le dispositif comprend des unités de traitement de signal (« DSP » pour « digital signal processing » en anglais, traitement numérique de signaux en français) DSP1, DSP2, DSP3.

Les DSP1, DSP2, DSP3 réalisent l'ensemble de fonctions qui traitent le signal intégré lorsque l'intégration est terminée. Ces blocs fournissent en sortie les données utiles concernant le signal intégré comme le temps d'arrivée de l'impulsion (TOA), le SNR du signal intégré, son énergie etc. Ces données sont ensuite exploitées par un microprocesseur (non représenté) qui calcule les positions des différentes balises.

Enfin, un séquenceur 340 pilote les différents blocs et en particulier génère les adresses des mémoires tampons et mémoires signaux.

On comprend donc que ce dispositif est configuré pour réaliser les différentes étapes du procédé décrit ci-dessus.

Grâce au procédé et au dispositif selon l'invention, on peut obtenir un gain de traitement optimal, ce qui permet, à peu de frais, d'augmenter la portée du dispositif.

L'essentiel des traitements sont effectués en temps réel, ce qui permet une disponibilité des résultats très rapides.


**Revendications**

1. Procédé d'intégration de signaux émis depuis un émetteur (1) vers au moins un récepteur (3) Ultra Large Bande (ULB), **caractérisé en ce que**

   - on initialise au préalable la mesure en estimant une dérive d'horloge $\Delta DH_{init}$ initiale entre l'émetteur (1) et le récepteur (2),
   - on réalise une boucle itérative lors de laquelle :

      ∘ on réalise une étape d'intégration d'au moins un signal primaire reçu composé d'au moins deux échantillons lors de laquelle on réalise au moins une première intégration utilisant la dérive d'horloge estimée et au moins une deuxième et une troisième intégration utilisant respectivement la dérive d'horloge estimée augmentée et diminuée d'une valeur prédéterminée,
      ∘ on sélectionne parmi lesdites au moins trois intégrations, celle qui maximise un critère de qualité, et on adapte, le cas échéant la dérive d'horloge à celle correspondant à l'intégration sélectionnée.

2. Procédé d'intégration de signaux émis depuis un émetteur (1) vers au moins un récepteur (2) Ultra Large Bande (ULB) selon la revendication 1, **caractérisé en ce que** lors de l'étape d'intégration, on réalise au moins trois intégrations d'un seul signal primaire reçu en utilisant respectivement la dérive d'horloge estimée $\Delta DH_i$, ainsi que la

dérive d'horloge estimée respectivement augmentée et diminuée d'une valeur prédéterminée $\Delta DH_i + \delta_1$ et $\Delta DH_i - \delta_2$, $\Delta DH_i$ étant la dérive d'horloge de la boucle i, i étant un nombre naturel, $\delta_1$ et $\delta_2$ correspondant respectivement à des dérives d'horloge prédéterminées élémentaires, et on sélectionne parmi les trois intégrations, celle qui maximise un critère de qualité, et on adapte, le cas échéant la dérive d'horloge $\Delta DH_{i+1}$ à celle correspondant à l'intégration sélectionnée.

3. Procédé d'intégration de signaux émis depuis un émetteur (1) vers au moins un récepteur (2) Ultra Large Bande (ULB) selon la revendication 2, **caractérisé en ce que** les dérives d'horloge prédéterminées élémentaires ($\delta_1$ ; $\delta_2$) sont égaux.

4. Procédé d'intégration de signaux émis depuis un émetteur (1) vers au moins un récepteur (2) Ultra Large Bande (ULB) selon la revendication 2 ou 3, **caractérisé en ce qu'**au moins une des deux dérives d'horloge prédéterminées élémentaires ($\delta_1$ ; $\delta_2$) correspondent à un décalage d'un échantillon $t_{éch}$ pour la durée d'intégration $T_{intégration}$.

5. Procédé d'intégration de signaux émis depuis un émetteur (1) vers au moins un récepteur (2) Ultra Large Bande (ULB) selon la revendication 1 ou 2, **caractérisé en ce que** lors de l'étape d'initialisation

   - on reçoit au moins un signal primaire émis par l'émetteur,
   - on réalise sur ce signal primaire j+1 intégrations différentes avec respectivement une dérive d'horloge $\Delta DH_j$ si situant dans une gamme discrète de dérives d'horloge $\Delta DH_j = \Delta DH + j*\delta$, $\Delta DH$ est une valeur de dérive d'horloge prédéterminée, j étant un nombre entier et $\delta$ correspondant à une dérive d'horloge prédéterminée élémentaire,
   - on sélectionne comme dérive d'horloge $\Delta DH_{init}$ initiale celle qui maximise un critère de qualité.

6. Procédé d'intégration de signaux émis depuis un émetteur (1) vers au moins un récepteur (2) Ultra Large Bande (ULB) selon la revendication 1 ou 2, **caractérisé en ce que** lors de l'étape d'initialisation :

   - on reçoit au récepteur un premier signal primaire émis par l'émetteur pendant une durée inférieure à un temps caractéristique de la dérive d'horloge de l'émetteur et du récepteur, on réalise une intégration sur ce premier signal primaire et on mesure son temps d'arrivée
   - après une période de temps $\theta$, on reçoit au récepteur un second signal primaire pendant une durée inférieure à un temps caractéristique de la dérive d'horloge de l'émetteur et du récepteur, on réalise une intégration sur ce second signal primaire et on mesure son temps d'arrivée
   - on détermine une estimation de la dérive d'horloge $\Delta DH_{init}$ initiale à partir de l'exploitation d'une différence entre les temps d'arrivée.

7. Procédé d'intégration de signaux émis depuis un émetteur (1) vers au moins un récepteur (2) Ultra Large Bande (ULB) selon la revendication 1 ou 2, **caractérisé en ce que** lors de l'étape d'initialisation :

   - on émet un premier signal primaire pendant une durée inférieure à un temps caractéristique de la dérive d'horloge de l'émetteur et du récepteur,
   - on reçoit et on réalise une intégration sur ce premier signal primaire,
   - après une période de temps $\theta$, on émet un second signal primaire pendant une durée inférieure à un temps caractéristique de la dérive d'horloge de l'émetteur et du récepteur, on reçoit ce second signal primaire et on réalise une intégration sur ce second signal primaire,
   - on détermine un intervalle de dérives d'horloge $\Delta DH_j$ initiales à partir de l'intégration des premiers et seconds échantillons,
   - on reçoit au moins un troisième signal primaire émis par l'émetteur,
   - on réalise sur ce troisième signal j+1 intégrations différentes avec respectivement une dérive d'horloge $\Delta DH_j$ si situant dans l'intervalle déterminé $\Delta DH_j = \Delta DH + j*\delta$, $\Delta DH$ est une valeur de dérive d'horloge prédéterminée, j étant un nombre naturel et $\delta$ correspondant à une dérive d'horloge prédéterminé élémentaire,
   - on sélectionne comme dérive d'horloge $\Delta DH_{init}$ initiale celle qui maximise un critère de qualité.

8. Procédé d'intégration de signaux émis depuis un émetteur (1) vers au moins un récepteur (2) Ultra Large Bande (ULB) selon l'une des revendications 1 à 7, **caractérisé en ce que** l'on réalise les intégrations par sommation de la valeur d'un échantillon (n,k) dans un emplacement de mémoire assigné et **en ce que** l'on applique la correction de la dérive d'horloge par décalage d'un pointeur d'adresse du mémoire.

**9.** Procédé d'intégration de signaux émis depuis un émetteur (1) vers au moins un récepteur (2) Ultra Large Bande (ULB) selon l'une des revendications 1 à 7, **caractérisé en ce que** l'on réalise les intégrations par corrélation de la valeur d'un échantillon (n,k) dans un emplacement de mémoire assigné et **en ce que** l'on applique la correction de la dérive d'horloge par décalage d'un pointeur d'adresse du mémoire.

**10.** Procédé d'intégration de signaux émis depuis un émetteur (1) vers au moins un récepteur (2) Ultra Large Bande (ULB) selon l'une des revendications précédentes, **caractérisé en ce que** l'on réalise les intégrations par sommation de la valeur d'un échantillon (n,k) dans un emplacement de mémoire assigné et **en ce que** l'on applique la correction de la dérive d'horloge par décalage de l'horloge de l'émetteur.

**11.** Procédé d'intégration de signaux émis depuis un émetteur (1) vers au moins un récepteur (2) Ultra Large Bande (ULB) selon l'une des revendications précédentes, **caractérisé en ce que** l'on réalise en parallèle lesdites au moins trois intégrations du signal primaire reçu en utilisant respectivement la dérive d'horloge estimée $\Delta DH_i$, ainsi que la dérive d'horloge estimée respectivement augmentée et diminuée d'une valeur prédéterminée $\Delta DH_i + \delta_1$ et $\Delta DH_i - \delta_2$.

**12.** Procédé d'intégration de signaux émis depuis un émetteur (1) vers au moins un récepteur (2) Ultra Large Bande (ULB) selon l'une des revendications 1 à 10, **caractérisé en ce que** l'on réalise de façon séquentielle au moins trois intégrations de trois signaux primaires reçus successivement en utilisant respectivement une dérive d'horloge estimée ($\Delta DH_i$), ainsi que cette dérive d'horloge estimée respectivement augmentée et diminuée d'une valeur prédéterminée ($\Delta DH_{i+1} + \delta_1$ et $\Delta DH_{i+2} - \delta_2$).

**13.** Procédé d'intégration de signaux émis depuis un émetteur (1) vers au moins un récepteur (2) Ultra Large Bande (ULB) selon l'une des revendications précédentes, **caractérisé en ce que** le critère de qualité correspond à un ou une combinaison des critères choisit du groupe suivant : le rapport signal sur bruit S /N, l'amplitude, l'énergie ou la puissance.

**14.** Dispositif d'intégration de signaux émis depuis un émetteur vers au moins un récepteur Ultra Large Bande (ULB), **caractérisé en ce qu'**il comprend des moyens configurés pour :

> • initialiser la mesure en estimant une dérive d'horloge $\Delta DH_{init}$ initiale entre l'émetteur (1) et le récepteur (2),
> • réaliser une boucle itérative lors de laquelle :

>> ◦ on réalise une étape d'intégration d'au moins un signal primaire reçu composé d'au moins deux échantillons lors de laquelle on réalise au moins une première intégration utilisant la dérive d'horloge estimée et au moins une deuxième et une troisième intégration utilisant respectivement la dérive d'horloge estimée augmentée et diminuée d'une valeur prédéterminée,
>> ◦ on sélectionne parmi lesdites au moins trois intégrations, celle qui maximise un critère de qualité, et on adapte, le cas échéant la dérive d'horloge à celle correspondant à l'intégration sélectionnée.

**15.** Dispositif d'intégration de signaux émis depuis un émetteur vers au moins un récepteur Ultra Large Bande (ULB) selon la revendication 14, **caractérisé en ce qu'**il comprend des moyens configurés pour :

> ◦ réaliser au moins trois intégrations du signal primaire reçu en utilisant respectivement la dérive d'horloge estimé $\Delta DH_i$, ainsi que la dérive d'horloge estimé respectivement augmentée et diminuée d'une valeur prédéterminée $\Delta DH_i + \delta_1$ et $\Delta DH_i - \delta_2$, $\Delta DH_i$ étant la drive d'horloge de la boucle i, i étant un nombre naturel, $\delta_1$ et $\delta_2$ correspondant respectivement à des dérives d'horloge prédéterminées élémentaires,
> ◦ sélectionner parmi les trois intégrations, celle qui maximise un critère de qualité, et le cas échéant la dérive d'horloge $\Delta DH_{i+1}$ pour adapter à celle correspondant à l'intégration sélectionnée.

**16.** Dispositif d'intégration selon l'une des revendications 14 à 15, **caractérisé en ce que** les moyens sont configurés pour

> • recevoir au moins un signal primaire émis par l'émetteur,
> • réaliser sur ce signal primaire j+1 intégrations différentes avec respectivement une dérive d'horloge $\Delta DH_j$ se situant dans une gamme discrète de dérives d'horloge $\Delta DH_j = \Delta DH + j *\delta$, $\Delta DH$ est une valeur de dérive d'horloge prédéterminée, j étant un nombre entier et $\delta$ correspondant à une dérive d'horloge prédéterminé élémentaire,
> • sélectionner comme dérive d'horloge $\Delta DH_{init}$ initiale celle qui maximise un critère de qualité.

**17.** Dispositif d'intégration de signaux émis depuis un émetteur vers au moins un récepteur Ultra Large Bande (ULB) selon l'une des revendications 14 à 16, **caractérisé en ce qu'**il comprend au moins une mémoire (22) et **en ce qu'**il est configuré pour réaliser les intégrations par sommation de la valeur d'un échantillon (n,k) dans un emplacement de mémoire assigné et pour appliquer la correction de la dérive d'horloge par décalage d'un pointeur (20) d'adresse du mémoire (k).

**Patentansprüche**

1. Verfahren zur Integration von Signalen, die von einem Sender (1) zu mindestens einem Ultrabreitband(UWB)-Empfänger (3) übertragen werden, **dadurch gekennzeichnet, dass**

   - die Messung vorab durch Schätzen einer initialen Taktdrift $\Delta DH_{init}$ zwischen dem Sender (1) und dem Empfänger (2) initialisiert wird,
   - eine Iterationsschleife gebildet wird, in der:

      ◦ ein Schritt der Integration von mindestens einem empfangenen Primärsignal, das aus mindestens zwei Abtastwerten besteht, durchgeführt wird, bei dem mindestens eine erste Integration unter Verwendung der geschätzten Taktdrift und mindestens eine zweite und eine dritte Integration unter Verwendung der jeweils um einen vorgegebenen Wert erhöhten und verminderten geschätzten Taktdrift durchgeführt wird,
      ◦ aus diesen mindestens drei Integrationen diejenige ausgewählt wird, die ein Qualitätskriterium maximiert, und gegebenenfalls die Taktdrift an diejenige angepasst wird, die der ausgewählten Integration entspricht.

2. Verfahren zur Integration von Signalen, die von einem Sender (1) zu mindestens einem Ultrabreitband(UWB)-Empfänger (2) übertragen werden, gemäß Anspruch 1, **dadurch gekennzeichnet, dass** während des Integrationsschrittes mindestens drei Integrationen eines einzelnen empfangenen Primärsignals unter jeweiliger Verwendung der geschätzten Taktdrift $\Delta DH_i$ sowie der jeweils um einen vorgegebenen Wert erhöhten und verminderten geschätzten Taktdrift $\Delta DH_i + \delta_1$ und $\Delta DH_i - \delta_2$ durchgeführt werden, wobei $\Delta DH_i$ die Taktdrift der Schleife i und i eine natürliche Zahl darstellt, $\delta_1$ und $\delta_2$ jeweils den elementaren vorgegebenen Taktdriften entsprechen, und aus den drei Integrationen diejenige ausgewählt wird, die ein Qualitätskriterium maximiert, und gegebenenfalls die Taktdrift $\Delta DH_{i+1}$ an diejenige angepasst wird, die der ausgewählten Integration entspricht.

3. Verfahren zur Integration von Signalen, die von einem Sender (1) zu mindestens einem Ultrabreitband(UWB)-Empfänger (2) übertragen werden, gemäß Anspruch 2, **dadurch gekennzeichnet, dass** die elementaren vorgegebenen Taktdriften $(\delta_1; \delta_2)$ gleich sind.

4. Verfahren zur Integration von Signalen, die von einem Sender (1) zu mindestens einem Ultrabreitband(UWB)-Empfänger (2) übertragen werden, gemäß Anspruch 2 oder 3, **dadurch gekennzeichnet, dass** mindestens eine der beiden elementaren vorgegebenen Taktdriften $(\delta_1; \delta_2)$ einer Verschiebung eines Abtastwertes $t_{éch}$ für die Integrationszeit $T_{intégration}$ entspricht.

5. Verfahren zur Integration von Signalen, die von einem Sender (1) zu mindestens einem Ultrabreitband(UWB)-Empfänger (2) übertragen werden, gemäß Anspruch 1 oder 2, **dadurch gekennzeichnet, dass** während des Schrittes der Initialisierung:

   - mindestens ein vom Sender übertragenes Primärsignal empfangen wird,
   - an diesem Primärsignal j+1 verschiedene Integrationen mit jeweils einer Taktdrift $\Delta DH_j$ durchgeführt werden, wenn sie sich in einem diskreten Bereich von Taktdriften $\Delta DH_j = \Delta DH + j * \delta$ befinden, wobei $\Delta DH$ ein vorgegebener Taktdriftwert ist, j eine ganze Zahl ist und $\delta$ einer elementaren vorgegebenen Taktdrift entspricht,
   - als initiale Taktdrift $\Delta DH_{init}$ diejenige ausgewählt wird, die ein Qualitätskriterium maximiert.

6. Verfahren zur Integration von Signalen, die von einem Sender (1) zu mindestens einem Ultrabreitband(UWB)-Empfänger (2) übertragen werden, gemäß Anspruch 1 oder 2, **dadurch gekennzeichnet, dass** während des Schrittes der Initialisierung:

   - am Empfänger ein erstes vom Sender übertragenes Primärsignal für eine Dauer empfangen wird, die geringer als eine für die Taktdrift von Sender und Empfänger charakteristische Zeit ist, an diesem ersten Primärsignal eine Integration durchgeführt und dessen Ankunftszeit gemessen wird,
   - nach einer Zeitspanne $\theta$ am Empfänger ein zweites Primärsignal für eine Dauer empfangen wird, die geringer als eine für die Taktdrift von Sender und Empfänger charakteristische Zeit ist, an diesem zweiten Primärsignal eine Integration durchgeführt und dessen Ankunftszeit gemessen wird,

- unter Ausnutzung einer Differenz zwischen den Ankunftszeiten eine Schätzung der initialen Taktdrift $\Delta DH_{init}$ ermittelt wird.

7. Verfahren zur Integration von Signalen, die von einem Sender (1) zu mindestens einem Ultrabreitband(UWB)-Empfänger (2) übertragen werden, gemäß Anspruch 1 oder 2, **dadurch gekennzeichnet, dass** während des Schrittes der Initialisierung:

    - ein erstes Primärsignal für eine Dauer übertragen wird, die geringer als eine für die Taktdrift von Sender und Empfänger charakteristische Zeit ist,
    - dieses erste Primärsignal empfangen und an diesem eine Integration durchgeführt wird,
    - nach einer Zeitspanne $\theta$ ein zweites Primärsignal für eine Dauer übertragen wird, die geringer als eine für die Taktdrift von Sender und Empfänger charakteristische Zeit ist, dieses zweite Primärsignal empfangen und an diesem zweiten Primärsignal eine Integration durchgeführt wird,
    - aus der Integration des ersten und zweiten Abtastwertes ein Intervall der initialen Taktdriften $\Delta DH_j$ ermittelt wird,
    - mindestens ein drittes vom Sender übertragenes Primärsignal empfangen wird,
    - an diesem dritten Signal j+1 verschiedene Integrationen mit jeweils einer Taktdrift $\Delta DH_j$ durchgeführt werden, wenn sie sich in einem bestimmten Intervall $\Delta DH_j = \Delta DH + j * \delta$ befinden, wobei $\Delta DH$ ein vorgegebener Taktdriftwert ist, j eine natürliche Zahl ist und $\delta$ einer elementaren vorgegebenen Taktdrift entspricht,
    - als initiale Taktdrift $\Delta DH_{init}$ diejenige ausgewählt wird, die ein Qualitätskriterium maximiert.

8. Verfahren zur Integration von Signalen, die von einem Sender (1) zu mindestens einem Ultrabreitband(UWB)-Empfänger (2) übertragen werden, gemäß einem der vorangehenden Ansprüche, **dadurch gekennzeichnet, dass** die Integrationen durch Summieren des Wertes eines Abtastwertes (n, k) in einem zugeordneten Speicherplatz durchgeführt werden und dass die Taktdriftkorrektur durch Verschieben eines Adresszeigers des Speichers angewendet wird.

9. Verfahren zur Integration von Signalen, die von einem Sender (1) zu mindestens einem Ultrabreitband(UWB)-Empfänger (2) übertragen werden, gemäß einem der Ansprüche 1 bis 7, **dadurch gekennzeichnet, dass** die Integrationen durch Korrelation des Wertes eines Abtastwertes (n, k) in einem zugeordneten Speicherplatz durchgeführt werden und dass die Taktdriftkorrektur durch Verschieben eines Adresszeigers des Speichers angewendet wird.

10. Verfahren zur Integration von Signalen, die von einem Sender (1) zu mindestens einem Ultrabreitband(UWB)-Empfänger (2) übertragen werden, gemäß einem der Ansprüche 1 bis 7, **dadurch gekennzeichnet, dass** die Integrationen durch Summieren des Wertes eines Abtastwertes (n, k) in einem zugeordneten Speicherplatz durchgeführt werden und dass die Taktdriftkorrektur durch Verschieben des Taktes des Senders angewendet wird.

11. Verfahren zur Integration von Signalen, die von einem Sender (1) zu mindestens einem Ultrabreitband(UWB)-Empfänger (2) übertragen werden, gemäß einem der vorangehenden Ansprüche, **dadurch gekennzeichnet, dass** die mindestens drei Integrationen des empfangenen Primärsignals parallel jeweils unter Verwendung der geschätzten Taktdrift $\Delta DH_i$ sowie der jeweils um einen vorgegebenen Wert erhöhten und verminderten geschätzten Taktdrift $\Delta DH_i + \delta_1$ und $\Delta DH_i - \delta_2$ durchgeführt werden.

12. Verfahren zur Integration von Signalen, die von einem Sender (1) zu mindestens einem Ultrabreitband(UWB)-Empfänger (2) übertragen werden, gemäß einem der Ansprüche 1 bis 10, **dadurch gekennzeichnet, dass** mindestens drei Integrationen von drei nacheinander empfangenen Primärsignalen jeweils unter Verwendung einer geschätzten Taktdrift $(\Delta DH_i)$ sowie der jeweils um einen vorgegebenen Wert erhöhten und verminderten geschätzten Taktdrift $(\Delta DH_{i+1} + \delta_1$ und $\Delta DH_{i+2} - \delta_2)$ sequentiell durchgeführt werden.

13. Verfahren zur Integration von Signalen, die von einem Sender (1) zu mindestens einem Ultrabreitband(UWB)-Empfänger (2) übertragen werden, gemäß einem der vorangehenden Ansprüche, **dadurch gekennzeichnet, dass** das Qualitätskriterium einem oder einer Kombination der Kriterien entspricht, die aus der folgenden Gruppe ausgewählt sind: Signal-Rausch-Verhältnis S/N, Amplitude, Energie oder Leistung.

14. Vorrichtung zur Integration von Signalen, die von einem Sender zu mindestens einem Ultrabreitband(UWB)-Empfänger übertragen werden, **dadurch gekennzeichnet, dass** sie Mittel umfasst, die dazu ausgelegt sind,

- die Messung vorab durch Schätzen einer initialen Taktdrift $\Delta DH_{init}$ zwischen dem Sender und dem Empfänger zu initialisieren,
- eine Iterationsschleife zu bilden, in der:

◦ ein Schritt der Integration von mindestens einem empfangenen Primärsignal, das aus mindestens zwei Abtastwerten besteht, durchgeführt wird, bei dem mindestens eine erste Integration unter Verwendung der geschätzten Taktdrift und mindestens eine zweite und eine dritte Integration, die jeweils um einen vorgegebenen Wert erhöht und vermindert ist, durchgeführt wird,

◦ aus diesen mindestens drei Integrationen diejenige ausgewählt wird, die ein Qualitätskriterium maximiert, und gegebenenfalls die Taktdrift an diejenige angepasst wird, die der ausgewählten Integration entspricht.

**15.** Vorrichtung zur Integration von Signalen, die von einem Sender zu mindestens einem Ultrabreitband(UWB)-Empfänger übertragen werden, gemäß Anspruch 14, **dadurch gekennzeichnet, dass** sie Mittel umfasst, die dazu ausgelegt sind,

◦ mindestens drei Integrationen des empfangenen Primärsignals jeweils unter Verwendung der geschätzten Taktdrift $\Delta DH_i$ sowie der jeweils um einen vorgegebenen Wert erhöhten und verminderten geschätzten Taktdrift $\Delta DH_i + \delta_1$ und $\Delta DH_i - \delta_2$ durchzuführen, wobei $\Delta DH_i$ die Taktdrift der Schleife i und i eine natürliche Zahl darstellt, $\delta_1$ und $\delta_2$ jeweils den elementaren vorgegebenen Taktdriften entsprechen,

◦ aus diesen mindestens drei Integrationen diejenige auszuwählen, die ein Qualitätskriterium maximiert, und gegebenenfalls die Taktdrift $\Delta DH_{i+1}$, um sie an diejenige anzupassen, die der ausgewählten Integration entspricht.

**16.** Vorrichtung gemäß einem der Ansprüche 14 bis 15, **dadurch gekennzeichnet, dass** sie Mittel umfasst, die dazu ausgelegt sind,

- mindestens ein vom Sender übertragenes Primärsignal zu empfangen,
- an diesem Primärsignal j+1 verschiedene Integrationen mit jeweils einer Taktdrift $\Delta DH_j$ durchzuführen, die sich in einem diskreten Bereich von Taktdriften $\Delta DH_j = \Delta DH + j * \delta$ befindet, wobei $\Delta DH$ ein vorgegebener Taktdriftwert ist, j eine ganze Zahl ist und $\delta$ einer elementaren vorgegebenen Taktdrift entspricht,
- als initiale Taktdrift $\Delta DH_{init}$ diejenige auszuwählen, die ein Qualitätskriterium maximiert.

**17.** Vorrichtung zur Integration von Signalen, die von einem Sender zu mindestens einem Ultrabreitband(UWB)-Empfänger übertragen werden, gemäß einem der Ansprüche 14 bis 16, **dadurch gekennzeichnet, dass** sie mindestens einen Speicher (22) umfasst und dass sie dazu ausgelegt ist, die Integrationen durch Summieren des Wertes eines Abtastwertes (n, k) in einem zugeordneten Speicherplatz durchzuführen und eine Taktdriftkorrektur durch Verschieben eines Adresszeigers (20) des Speichers (k) vorzunehmen.

## Claims

**1.** Method for integrating signals emitted from an emitter (1) to at least one Ultra Wide Band (UWB) receiver (3), **characterized in that**

- the measurement is initialized beforehand by estimating an initial clock drift $\Delta DH_{init}$ between the emitter (1) and the receiver (2),
- an iterative loop is carried out during which:

◦ a step of integrating at least one primary signal received composed of at least two samples is carried out during which at least one first integration is carried out using the estimated clock drift and at least one second and one third integration are carried out using respectively the estimated clock drift increased and decreased by a predetermined value,

◦ from among the said at least three integrations is selected that one which maximizes a quality criterion, and, if appropriate, the clock drift is adapted to that corresponding to the integration selected.

**2.** Method for integrating signals emitted from an emitter (1) to at least one Ultra Wide Band (UWB) receiver (2) according to Claim 1, **characterized in that** during the integration step, at least three integrations of a single primary signal received are carried out by using respectively the estimated clock drift $\Delta DH_i$, as well as the estimated clock drift respectively increased and decreased by a predetermined value $\Delta DH_i + \delta_1$ and $\Delta DH_i - \delta_2$, $\Delta DH_i$ being the clock drift of loop i, i being a natural number, $\delta_1$ and $\delta_2$ corresponding respectively to elementary predetermined clock drifts, and from among the three integrations is selected that one which maximizes a quality criterion, and, if appropriate, the clock drift $\Delta DH_{i+1}$ is adapted to that corresponding to the integration selected.

3. Method for integrating signals emitted from an emitter (1) to at least one Ultra Wide Band (UWB) receiver (2) according to Claim 2, **characterized in that** the elementary predetermined clock drifts ($\delta_1$; $\delta_2$) are equal.

4. Method for integrating signals emitted from an emitter (1) to at least one Ultra Wide Band (UWB) receiver (2) according to Claim 2 or 3, **characterized in that** at least one of the two elementary predetermined clock drifts ($\delta_1$; $\delta_2$) correspond to a shift of a sample $t_{ech}$ for the duration of integration $T_{integration}$.

5. Method for integrating signals emitted from an emitter (1) to at least one Ultra Wide Band (UWB) receiver (2) according to Claim 1 or 2, **characterized in that** during the initialization step

   - at least one primary signal emitted by the emitter is received,
   - j+1 different integrations are carried out on this primary signal with respectively a clock drift $\Delta DH_j$ if lying in a discrete span of clock drifts $\Delta DH_j = \Delta DH + j * \delta$, $\Delta DH$ is a predetermined clock drift value, j being an integer and $\delta$ corresponding to an elementary predetermined clock drift,
   - the clock drift which maximizes a quality criterion is selected as initial clock drift $\Delta DH_{init}$.

6. Method for integrating signals emitted from an emitter (1) to at least one Ultra Wide Band (UWB) receiver (2) according to Claim 1 or 2, **characterized in that** during the initialization step:

   - a first primary signal emitted by the emitter for a lesser duration than a time characteristic of the clock drift of the emitter and of the receiver is received at the receiver, an integration is carried out on this first primary signal and its time of arrival is measured
   - after a time period $\theta$, a second primary signal is received at the receiver for a lesser duration than a time characteristic of the clock drift of the emitter and of the receiver, an integration is carried out on this second primary signal and its time of arrival is measured
   - an estimation of the initial clock drift $\Delta DH_{init}$ is determined by utilizing a difference between the times of arrival.

7. Method for integrating signals emitted from an emitter (1) to at least one Ultra Wide Band (UWB) receiver (2) according to Claim 1 or 2, **characterized in that** during the initialization step:

   - a first primary signal is emitted for a lesser duration than a time characteristic of the clock drift of the emitter and of the receiver,
   - it is received and an integration is carried out on this first primary signal,
   - after a time period $\theta$, a second primary signal is emitted for a lesser duration than a time characteristic of the clock drift of the emitter and of the receiver, this second primary signal is received and an integration is carried out on this second primary signal,
   - an interval of initial clock drifts $\Delta DH_j$ is determined by integration of the first samples and second samples,
   - at least one third primary signal emitted by the emitter is received,
   - j+1 different integrations are carried out on this third signal with respectively a clock drift $\Delta DH_j$ if lying in the determined interval $\Delta DH_j = \Delta DH + j * \delta$, $\Delta DH$ is a predetermined clock drift value, j being a natural number and $\delta$ corresponding to an elementary predetermined clock drift,
   - the clock drift which maximizes a quality criterion is selected as initial clock drift $\Delta DH_{init}$.

8. Method for integrating signals emitted from an emitter (1) to at least one Ultra Wide Band (UWB) receiver (2) according to one of the preceding claims, **characterized in that** the integrations are carried out by summing the value of a sample (n,k) in an assigned memory slot and **in that** the correction of the clock drift is applied by shifting an address pointer of the memory.

9. Method for integrating signals emitted from an emitter (1) to at least one Ultra Wide Band (UWB) receiver (2) according to one of Claims 1 to 7, **characterized in that** the integrations are carried out by correlating the value of a sample (n,k) in an assigned memory slot and **in that** the correction of the clock drift is applied by shifting an address pointer of the memory.

10. Method for integrating signals emitted from an emitter (1) to at least one Ultra Wide Band (UWB) receiver (2) according to one of Claims 1 to 7, **characterized in that** the integrations are carried out by summing the value of a sample (n,k) in an assigned memory slot and **in that** the correction of the clock drift is applied by shifting the clock of the emitter.

11. Method for integrating signals emitted from an emitter (1) to at least one Ultra Wide Band (UWB) receiver (2) according to one of the preceding claims, **characterized in that** the said at least three integrations of the primary signal received are carried out in parallel by using respectively the estimated clock drift $\Delta DH_i$, as well as the estimated clock drift respectively increased and decreased by a predetermined value $\Delta DH_i + \delta_1$ and $\Delta DH_i - \delta_2$.

12. Method for integrating signals emitted from an emitter (1) to at least one Ultra Wide Band (UWB) receiver (2) according to one of Claims 1 to 10, **characterized in that** at least three integrations of three primary signals received successively are carried out in a sequential manner by using respectively an estimated clock drift ($\Delta DH_i$), as well as this estimated clock drift respectively increased and decreased by a predetermined value ($\Delta DH_{i+1} + \delta_1$ and $\Delta DH_{i+2} - \delta_2$).

13. Method for integrating signals emitted from an emitter (1) to at least one Ultra Wide Band (UWB) receiver (2) according to one of the preceding claims, **characterized in that** the quality criterion corresponds to one or a combination of the criteria chosen from the following group: the signal-to-noise ratio S/N, the amplitude, the energy or the power.

14. Device for integrating signals emitted from an emitter to at least one Ultra Wide Band (UWB) receiver, **characterized in that** it comprises means configured

- to initialize the measurement by estimating an initial clock drift $\Delta DH_{init}$ between the emitter and the receiver,
- to carry out an iterative loop during which:

o a step of integrating at least one primary signal received composed of at least two samples is carried out during which at least one first integration is carried out using the estimated clock drift and at least one second and one third integration are carried out respectively increased and decreased by a predetermined value,
o from among the said at least three integrations is selected that one which maximizes a quality criterion, and, if appropriate, the clock drift is adapted to that corresponding to the integration selected.

15. Device for integrating signals emitted from an emitter to at least one Ultra Wide Band (UWB) receiver according to Claim 14, **characterized in that** it comprises means configured to

o carry out at least three integrations of the primary signal received by using respectively the estimated clock drift $\Delta DH_i$, as well as the estimated clock drift respectively increased and decreased by a predetermined value $\Delta DH_i + \delta_1$ and $\Delta DH_i - \delta_2$, $\Delta DH_i$ being the clock drift of loop i, i being a natural number, $\delta_1$ and $\delta_2$ corresponding respectively to elementary predetermined clock drifts,
o select from among the three integrations, that one which maximizes a quality criterion, and if appropriate the clock drift $\Delta DH_{i+1}$ so as to adapt to that corresponding to the integration selected.

16. Integration device according to one of Claims 14 to 15, **characterized in that** the means are configured to

- receive at least one primary signal emitted by the emitter,
- carry out on this primary signal j+1 different integrations with respectively a clock drift $\Delta DH_j$ lying in a discrete span of clock drifts $\Delta DH_j = \Delta DH + j * \delta$, $\Delta DH$ is a predetermined clock drift value, j being an integer and $\delta$ corresponding to an elementary predetermined clock drift,
- select as initial clock drift $\Delta DH_{init}$ that one which maximizes a quality criterion.

17. Device for integrating signals emitted from an emitter to at least one Ultra Wide Band (UWB) receiver according to one of Claims 14 to 16, **characterized in that** it comprises at least one memory (22) and **in that** it is configured to carry out the integrations by summing the value of a sample (n,k) in an assigned memory slot and to apply the correction of the clock drift by shifting an address pointer (20) of the memory (k).

# FIG. 1

$$d = c/2*(A-DT-t_0)$$

$$t_0$$

$$A=t_0+2d/c+\Delta T$$

temps

$$t_0+d/c$$

$$t_0+d/c+\Delta T$$

# FIG. 2

**FIG. 3**

**FIG. 4**

**Signal reçu $x_n^k$**

**FIG. 5**

Signal reçu

1 µs   1 µs   1 µs

Intégration

2048 ech. / 1 µs

65000 pulses

500 ps

FIG. 6

**Signal reçu**

0 0 0 0 0 1 0 0 1 1 0 0 0 0 0 0 0 0 0 0 1 0 0 1 1 0 0 0 0 0 0 0 0 0 0 1 0 0 1 1 0 0 0 0

◄─────────────────► ◄─────────────────► ◄─────────────────►
**1.0001 μs**          **1.0001 μs**          **1.0001 μs**

**Intégration**

**2048 ech. / 1 μs**
◄───────────────────────────────────────────►

| 0 | 0 | 0 | 0 | 0 | 1 | 0 | 0 | 1 | 1 | 0 | 0 | 0 | 0 | 0 |

| 0 | 0 | 0 | 0 | 1 | 0 | 0 | 1 | 1 | 0 | 0 | 0 | 0 | 0 | 0 |

| 0 | 0 | 0 | 1 | 0 | 0 | 1 | 1 | 0 | 0 | 0 | 0 | 0 | 0 | 0 |

| 0 | 0 | 1 | 0 | 0 | 1 | 1 | 0 | 0 | 0 | 0 | 0 | 0 | 0 | 0 |

| 0 | 1 | 0 | 0 | 1 | 1 | 0 | 0 | 0 | 0 | 0 | 0 | 0 | 0 | 0 |

**65000 pulses**

**500 ps**
◄─►

| 0 | 1 | 2 | 3 | 4 | 5 | 4 | 3 | 2 | 1 | 0 | 0 | 0 | 0 | 0 |

# FIG. 7

$\Delta DH_{i+1}$

$\Delta DH_{i+1} - \delta$

$\Delta DH_{i+1} + \delta$

FIG. 8

22

$x_N{}^k$

N
,
k
1

⊕

20

valeur    adresse

| 0 | 0 |
| 0 | |
| 0 | k-1 |
| 10 | k |
| 0 | k+1 |
| 0 | n-1 |

FIG. 9

Signal reçu $x_N{}^k$

$T_{drift}$

N-1, 0
N-1, 1
N-1, k-1
N-1, k
N-1, k+1
N-1, n-3
N-1, n-2
N, n-1
N, 0
N, 1
N, k-1
N, k
N, k+1
N, n-3
N, n-2
N, n-1
N-1, 0
N-1, 1
N+1, k-1
N+1, k
N+1, k+1
N+1, n-3
N+1, n-2
N, n-1

| 0 | 0 | 0 | 1 | 0 | 0 | 0 | 0 | 0 | 0 | 0 | 1 | 0 | 0 | 0 | 0 | 0 | 0 | 0 | 1 | 0 | 0 | 0 | 0 |

PRP N-1          PRP N          PRP N+1

Signal intégré $y_k$

| 0 | 0 | 0 | 10 | 0 | 0 | 0 | 0 |
| 1 | 2 | k-1 | k | k+1 | n-3 | n-2 | n-1 |

FIG. 10

**FIG. 11**

**FIG. 12**

**FIG. 13**

FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 1996041432 A
- WO 2001073712 A
- WO 2001093442 A
- WO 2001093444 A
- WO 2001093446 A
- US 20050089083 A
- US 20060018369 A
- WO 2006003294 A
- EP 1903702 A1

**Littérature non-brevet citée dans la description**

- **M. Z. WIN ; R. A. SCHOLTZ.** Impulse radio How it works. *IEEE Comm. Letters,* Février 1998, vol. 2 (2), 36-38
- **LI HUANG et al.** *Timing Tracking Algorithms for Impulse Radio (IR) Based Ultra Wideband Systems,* 2007
- **DEPENG JIN et al.** *Periodical-Pilot-Assisted Tracking Loop with RAKE Combining for High Rate DS-UWB Receivers,* 2010
- **REINER MOORFIELD et al.** *Ultra-Wideband (UWB-IR) Algorithm Implementation - Complexity and Performance,* 2004
- **WEIHUA ZHANG et al.** *Improved Delay-Locked Loop in a UWB Impulse Radio Time-Hopping Spread-Spectrum System,* 2007
- **LI HUANG et al.** *2007 3rd International conférence on wireless communications, networking, and mobile computing - WiCOM '07 21-25 Sept. 2007 Shanghai,* 21 Septembre 2007, 570-573
- 2007 3rd International conférence on wireless communications, networking, and mobile computing, WiCOM '07. IEEE